Europäisches Patentamt

European Patent Office

Office européen des brevets

(19)

(11) **EP 0 759 248 B1**

(12) **EUROPÄISCHE PATENTSCHRIFT**

(45) Veröffentlichungstag und Bekanntmachung des Hinweises auf die Patenterteilung:
**03.11.1999 Patentblatt 1999/44**

(21) Anmeldenummer: **96905701.7**

(22) Anmeldetag: **07.03.1996**

(51) Int Cl.6: **H04N 1/40**, H04N 1/60

(86) Internationale Anmeldenummer:
**PCT/DE96/00423**

(87) Internationale Veröffentlichungsnummer:
**WO 96/27976 (12.09.1996 Gazette 1996/41)**

(54) **VERFAHREN UND EINRICHTUNG ZUR ERZEUGUNG EINES GRAU-COMPOSITE-PROOFS**

PROCESS AND DEVICE FOR GENERATING A GREY COMPOSITE PROOF

PROCEDE ET DISPOSITIF DE PRODUCTION D'UNE EPREUVE COMPOSITE EN TONS DE GRIS

(84) Benannte Vertragsstaaten:
**DE FR GB**

(30) Priorität: **08.03.1995 DE 19508163**

(43) Veröffentlichungstag der Anmeldung:
**26.02.1997 Patentblatt 1997/09**

(73) Patentinhaber: **Heidelberger Druckmaschinen Akfiengesellschaft**
**69115 Heidelberg (DE)**

(72) Erfinder:
- **KÖHLER, Thomas**
  **D-35325 Mücke (DE)**
- **NETTHORN, Andreas**
  **D-65929 Frankfurt (DE)**
- **LANG, Klaus**
  **D-55583 Bad Münster-Ebernburg (DE)**

(56) Entgegenhaltungen:
EP-A- 0 199 272      EP-A- 0 389 743
EP-A- 0 592 769      WO-A-93/21725
US-A- 4 743 962      US-A- 5 278 678

**Beschreibung**

Die Erfindung bezieht sich auf das Gebiet der elektronischen Reproduktionstechnik und betrifft ein Verfahren und eine Einrichtung zur Erzeugung eines gerasterten Grau-Composite-Proofs mittels eines Schwarz/Weiß-Aufzeichnungsgerätes, beispielsweise eines Schwarz/Weiß-Druckers, zur Vorabkontrolle eines Farbdrucks. Unter Grau-Composite-Proof wird ein Vorabdruck, Proof genannt, verstanden, in dem die Farbwerte der vier Farbauszüge "Cyan", "Magenta", "Gelb" und "Schwarz" zu helligkeitsäquivalenten Grauwerten vereinigt werden.

Zur Belichtung von gerasterten Farbauszügen "Cyan", "Magenta", "Gelb" und "Schwarz" für den Farbdruck mittels eines elektronischen Aufzeichnungsgerätes, auch Recorder oder Belichter genannt, werden zunächst Farbauszugswerte für die einzelnen Farbauszüge erzeugt. Die Farbauszugswerte werden dann einem Raster-Generator zugeführt, in dem sie nach einer Raster-Funktion in eine Bitmap umgewandelt werden, deren Steuerbits zum bildpunktweisen Ein- und Ausschalten eines Belichtungsstrahles in dem Belichter bei der bildpunkt- und zeilenweisen Aufzeichnung der gerasterten Farbauszüge verwendet werden. Die gerasterten Farbauszüge dienen zur Herstellung der Druckformen für den späteren Farbdruck.

In der Praxis werden zur Vorabkontrolle des zu erwartenden Ergebnisses beim Farbdruck Proofs hergestellt. Die Herstellung von einfachen gerasterten Farb-Proofs erfolgt beispielsweise mittels eines Farbkopierers, dem ein Raster-Generator vorgeschaltet ist. Einfache gerasterte Schwarz/Weiß-Proofs für die einzelnen Farbauszüge werden beispielsweise mittels eines Schwarz/Weiß-Druckers gedruckt, dem ebenfalls ein Raster-Generator vorgeschaltet ist. Ein derartiges Verfahren wird beispielsweise in EP-A-0 389 743 beschrieben.

Die Vorabkontrolle des zu erwartenden Ergebnisses eines Farbdrucks anhand von einfachen Schwarz/Weiß-Proofs für jeden Farbauszug erlaubt keine verbindliche Aussage über die Qualität des späteren Farbdrucks, da die Helligkeiten auf dem gedruckten Schwarz/Weiß-Proof nicht dem von den entsprechenden Druckfarben beim Farbdruck hervorgerufenen Helligkeitseindruck entsprechen.

Aufgabe der vorliegenden Erfindung ist es daher, ein Verfahren und eine Einrichtung zur Erzeugung eines Proofs derart zu verbessern, daß anhand eines gerasterten Grau-Composite-Proofs eine sichere Vorabkontrolle der zu erwartenden Ergebnisses beim Farbdruck möglich wird.

Diese Aufgabe wird bezüglich des Verfahrens durch die Merkmale des Anspruchs 1 und bezüglich der Einrichtung durch die Merkmale des Anspruchs 24 gelöst.

Vorteilhafte Weiterbildungen sind in den Unteransprüchen angegeben.

Die Erfindung wird nachfolgend anhand der Fig. 1 bis 19 näher erläutert.

Es zeigen:

Fig. 1          ein erstes Ausführungsbeispiel einer Einrichtung zur Erzeugung eines gerasterten Grau-Composite-Proofs in Form eines prinzipiellen Blockschaltbildes,

Fig. 2a; 2b      eine erste grafische Darstellung einer Schwellwert-Matrix und einer Bitmap für die Druckfarbe "Cyan",

Fig. 3a; 3b      eine erste grafische Darstellung einer Schwellwert-Matrix und einer Bitmap für die Druckfarbe "Magenta",

Fig. 4a; 4b      eine erste grafische Darstellung einer Schwellwert-Matrix und einer Bitmap für die Druckfarbe "Gelb",

Fig. 5          eine grafische Darstellung einer Gesamt-Bitmap bzw. einer Rastermasche,

Fig. 6          ein zweites Ausführungsbeispiel einer Einrichtung zur Erzeugung eines gerasterten Grau-Composite-Proofs in Form eines prinzipiellen Blockschaltbildes,

Fig. 7a; 7b      eine zweite grafische Darstellung einer Schwellwert-Matrix und einer Bitmap für die Druckfarbe "Cyan",

Fig. 8a; 8b      eine zweite grafische Darstellung einer Schwellwert-Matrix und einer Bitmap für die Druckfarbe "Magenta",

Fig. 9a; 9b      eine zweite grafische Darstellung einer Schwellwert-Matrix und einer Bitmap für die Druckfarbe "Gelb",

Fig. 10          eine weitere grafische Darstellung einer Gesamt-Bitmap bzw. einer Rastermasche,

Fig. 11          ein drittes Ausführungsbeispiel einer Einrichtung zur Erzeugung eines gerasterten Grau-Composite-Proofs in Form eines prinzipiellen Blockschaltbildes,

Fig. 12a; 12b   eine dritte grafische Darstellung einer Schwellwert-Matrix und einer Bitmap für die Druckfarbe "Cyan",

Fig. 13a; 13b   eine dritte grafische Darstellung einer Schwellwert-Matrix und einer Bitmap für die Druckfarbe "Magenta",

Fig. 14a; 14b   eine dritte grafische Darstellung einer Schwellwert-Matrix und einer Bitmap für die Druckfarbe "Gelb",

Fig. 15a; 15b   eine vierte grafische Darstellung einer Schwellwert-Matrix und einer Bitmap für die Druckfarbe "Cyan" zur Erzeugung eines kompakten Rasterpunktes,

Fig. 16a; 16b   eine vierte grafische Darstellung einer Schwellwert-Matrix und einer Bitmap für die Druckfarbe "Magenta" zur Erzeugung eines kompakten Rasterpunktes,

Fig. 17a; 17b   eine vierte grafische Darstellung einer Schwellwert-Matrix und einer Bitmap für die Druckfarbe "Gelb" zur Erzeugung eines kompakten Rasterpunktes,

Fig. 18   eine weitere grafische Darstellung einer Gesamt-Bitmap bzw. einer Rastermasche zur Erzeugung eines kompakten Rasterpunktes und

Fig. 19   eine vorteilhafte Weiterbildung der Einrichtungen zur Berücksichtigung von Schmuckfarben im Grau-Composite-Proof.

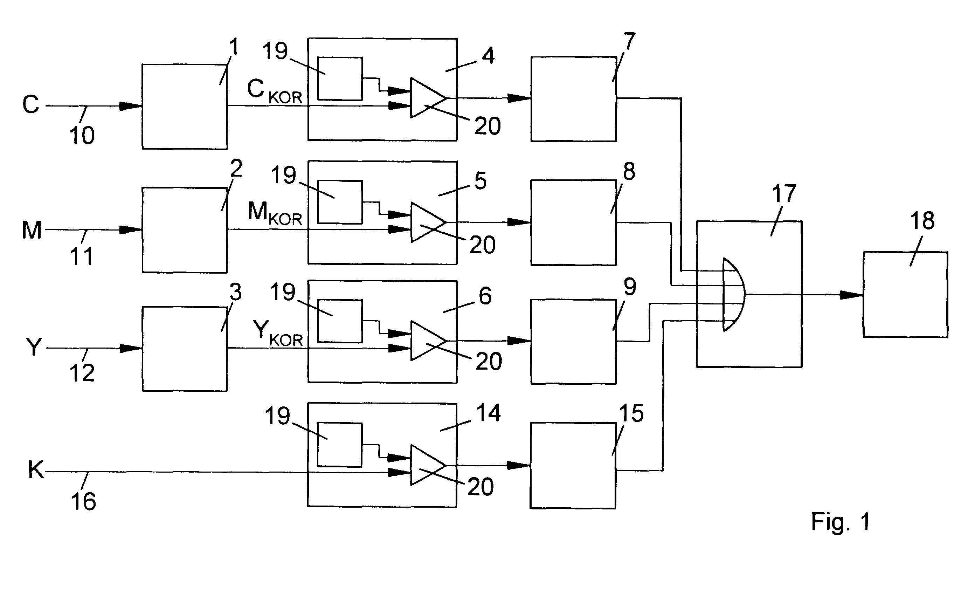

Fig. 1 zeigt ein erstes Ausführungsbeispiel einer Einrichtung zur Erzeugung eines gerasterten Grau-Composite-Proofs in Form eines prinzipiellen Blockschaltbildes. Die Einrichtung besteht im wesentlichen aus jeweils einer Korrektur-Stufe (1, 2, 3), einem nachgeschalteten Raster-Generator (4, 5, 6) und einem nachgeschalteten Bitmap-Speicher (7, 8, 9) in jedem der drei Farbkanäle (10, 11, 12) für die bunten Farbauszüge "Cyan", "Magenta" und "Gelb" sowie aus einem weiteren Raster-Generator (14) mit einem nachgeschalteten Bitmap-Speicher (15) im Farbkanal (16) für den Farbauszug "Schwarz", sowie aus einer Verknüpfungs-Stufe (17) für die vier Farbkanäle (10, 11, 12, 16) und einem der Verknüpfungs-Stufe (17) nachgeschalteten Schwarz/Weiß-Aufzeichnungsgerät (18) in Form eines Schwarz/Weiß-Druckers oder Schwarz/Weiß-Plotters zum Druck des gerasterten Grau-Composite-Proofs auf einem Aufzeichnungsmaterial, beispielsweise auf einem Papierbogen. Die Verknüpfungs-Stufe (17) ist beispielsweise ein handelsüblicher Personal Computer (PC). Jeder Raster-Generator (4, 5, 6, 14) weist im ersten Ausführungsbeispiel einen adressierbaren Schwellwert-Speicher (19) und einen Komparator (20) auf.

Die Farbauszugswerte (C, M, Y) der drei bunten Farbauszüge "Cyan" (C), "Magenta" (M) und "Gelb" (Y) des zu reproduzierenden Farbbildes werden zunächst den Korrektur-Stufen (1, 2, 3) in den drei Farbkanälen (10, 11, 12) zugeführt. Die Farbauszugswerte (C, M, Y) und die Farbauszugswerte (K) für den Farbauszug "Schwarz" (K) repräsentieren Grauwerte z.B. in einem Wertebereich von 0 (Weiß) bis 63 (Schwarz).

Um ein Grau-Composite-Proof mit einem für die Vorabkontrolle richtigen Helligkeitseindruck aufzeichnen zu können, müssen die aufzuzeichnenden Grauwerte der drei bunten Druckfarben "Cyan", "Magenta" und "Gelb" gegenüber den Original-Grauwerten auf unterschiedliche prozentuale Anteile reduziert werden. Dazu werden die Farbauszugswerte (C, M, Y) in dem ersten Ausführungsbeispiel in den Korrektur-Stufen (1, 2, 3) durch Multiplikation mit unterschiedlichen Korrekturfaktoren ($L_C$, $L_M$, $L_Y$) gemäß Gleichungen [1] in ihren jeweiligen Wertebereichen begrenzt, um korrigierte Farbauszugswerte ($C_{KOR}$, $M_{KOR}$, $Y_{KOR}$) zu erhalten.

$$C_{KOR} = L_C \times C$$

$$M_{KOR} = L_M \times M \qquad\qquad\qquad [1]$$

$$Y_{KOR} = L_Y \times Y$$

Durch die unterschiedliche Begrenzung der Wertebereiche der Farbauszugswerte (C, M, Y) gemäß Gleichungen [1] wird eine relative Aufhellung der bunten Druckfarben "Cyan", "Magenta" und "Gelb" gegenüber "Schwarz" erreicht, so daß die Grauwerte des zu erstellenden Grau-Composite-Proofs weitestgehend den Helligkeitseindruck der beim späteren Farbdruck gedruckten Farben "Cyan", "Magenta" und "Gelb" vermitteln. Dadurch ermöglicht der

EP 0 759 248 B1

Grau-Composite-Proof in vorteilhafter Weise eine verbindliche Vorabkontrolle eines Farbdrucks.

Zur Ermittlung der Korrekturfaktoren ($L_C$, $L_M$, $L_Y$) für die Farbauszugswerte (C, M, Y) werden die entsprechenden Luminanzwerte von gerasterten Volltonflächen (Rasterpunktgröße 100%) der Druckfarben "Cyan", "Magenta", "Gelb" und "Schwarz" mittels eines Spektralphotometers ausgemessen und die Meßergebnisse in Relation zu dem Luminanzwert (100 %) der Volltonfläche der Druckfarbe "Schwarz" gesetzt. Dabei ergeben sich beispielsweise folgende Korrekturfaktoren ($L_C$, $L_M$, $L_Y$) :

Für Vollton "Cyan"        $L_C$ = 0,30 (30%)
Für Vollton "Magenta"        $L_M$ = 0,59 (59%)
Für Vollton "Gelb"        $L_Y$ = 0,11 (11%)

Diese Korrekturfaktoren ($L_C$, $L_M$, $L_Y$) entsprechen jeweils dem subjektiv empfundenen Helligkeitseindruck der bunten Druckfarben "Cyan", "Magenta" und "Gelb" gegenüber "Schwarz".

Mit diesen Korrekturfaktoren ($L_C$, $L_M$, $L_Y$) ergeben sich bei dem genannten Beispiel ein begrenzter Wertebereich von 0 bis 19 für die Farbauszugswerte (C), ein begrenzter Wertebereich von 0 bis 36 für die Farbauszugswerte (M) und ein begrenzter Wertebereich von 0 bis 6 für die Farbauszugswerte (Y), während der Wertebereich für die Farbauszugswerte (K) uneingeschränkt zwischen 0 und 63 liegt. Durch die Wertebegrenzung werden beim Druck des Grau-Composite-Proofs bei den maximalen Original-Grauwerten der bunten Druckfarben jeweils nur Helligkeiten von ca. 30%, 59% und 11% gegenüber der Helligkeit 100% von "Schwarz" gedruckt.

Die in den Korrektur-Stufen (1, 2, 3) in ihren Wertebereichen unterschiedlich begrenzten Farbauszugswerte ($C_{KOR}$, $M_{KOR}$, $Y_{KOR}$) der bunten Farbauszüge und die in ihrem Wertebereich unbegrenzten Farbauszugswerte (K) des Farbauszugs "Schwarz" werden den Raster-Generatoren (4, 5, 6, 14) in den vier Farbkanälen (10, 11, 12, 16) zugeführt, in denen sie nach vorgegebenen unterschiedlichen Raster-Funktionen für die vier Druckfarben in Steuerbits mit den Zuständen "0" oder "1" für die aufzuzeichnenden Bildpunkte in Form von vier Einzel-Bitmaps für die Druckfarben "Cyan", "Magenta", "Gelb" und "Schwarz" umgewandelt werden. Eine Bitmap ist eine matrixartige Anordnung von Bits, die den einzelnen Bildpunkten zugeordneten sind, in die das Aufzeichnungsmaterial entsprechend der Aufzeichnungsfeinheit unterteilt ist. Die in den Raster-Generatoren (4, 5, 6, 14) erzeugten Steuerbits der vier Einzel-Bitmaps werden in den nachgeschalteten Bitmap-Speichern (7, 8, 9, 15) zwischengespeichert.

Die aus den Bitmap-Speichern (7, 8, 9, 15) ausgelesenen Steuerbits der vier Einzel-Bitmaps werden dann in der Verknüfungs-Stufe (17) bildpunktweise durch eine logische ODER-Verknüpfung zu den Steuerbits einer Gesamt-Bitmap vereinigt. Die Steuerbits der Gesamt-Bitmap werden dem Schwarz/Weiß-Drucker (18) zum bildpunkt- und zeilenweisen Druck des gerasterten Grau-Composite-Proofs zugeführt, wobei jedes Steuerbit entsprechend seinem jeweiligen Zustand "0" oder "1" signalisiert, ob der dem betreffenden Steuerbit zugeordnete Bildpunkt auf dem Aufzeichnungsmaterial als Rasterpunkt oder Teil eines Rasterpunktes gedruckt oder nicht gedruckt wird.

Die logische ODER-Verknüpfung der Steuerbits der vier gespeicherten Einzel-Bitmaps soll mindestens für niedrige Helligkeitswerte eine Addition von Helligkeitswerten nachbilden. Um eine Addition der Helligkeitswerte zu erreichen, ist es erforderlich, daß die gedruckten Bildpunkte der bunten Druckfarben "Cyan", "Magenta" und "Gelb" auf dem Aufzeichnungsmaterial nebeneinander liegen, während die gedruckten Bildpunkte der Druckfarbe "Schwarz" sich mit den gedruckten Bildpunkten der bunten Druckfarben auch überlagern können. Diese Forderung wird durch eine spezielle Generierung der Einzel-Bitmaps in den Raster-Generatoren (4, 5, 6, 14) erreicht. Das Raster-Verfahren und die Wirkungsweise der Raster-Generatoren (4, 5, 6, 14) sollen nachfolgend näher beschrieben werden.

Ein Raster besteht aus einer Vielzahl von sich in Zeilenrichtung und senkrecht dazu periodisch wiederholenden und aneinandergrenzenden Rastermaschen, in denen in Abhängigkeit von den aufzuzeichnenden Grauwerten eine unterschiedlich große Anzahl von Bildpunkten in der Rastermasche willkürlich verteilt oder als kompakte Rasterpunkte unterschiedlicher Größe aufgezeichnet werden. Das Aufzeichnungsmaterial ist in eine Vielzahl von Bildpunkten unterteilt zu denken. Während der Aufzeichnung des Grau-Composite-Proofs überfährt das Druckorgan des Schwarz/Weiß-Druckers die einzelnen Bildpunkte, und die Zustände "0" oder "1" der den Bildpunkten ortsmäßig zugeordneten Steuerbits der Gesamt-Bitmap entscheiden, welche Bildpunkte gedruckt (Zustand "1") oder nicht gedruckt (Zustand "0") werden.

Die Erzeugung der Einzel-Bitmaps in den Raster-Generatoren (4, 5, 6, 14) für die vier Druckfarben erfolgt beispielsweise nach der US-A-4 499 489.

In dem adressierbaren Schwellwert-Speicher (19) eines Raster-Generators ist eine Schwellwert-Matrix abgespeichert, die in Matrixelemente unterteilt ist. Jedem Matrixelement ist ein Schwellwert zugeordnet. Die Schwellwerte repräsentieren die sich periodisch wiederholende Grundstruktur für jede Rastermasche des Rasters. Jedem Matrixelement innerhalb der Schwellwert-Matrix entspricht ein Bildpunkt innerhalb einer Rastermasche des Rasters. Die Schwellwerte der einzelnen Matrixelemente sind jeweils unter denjenigen Adressen des Schwellwert-Speichers (19) abgelegt, die den Ortskoordinaten der zugeordneten Bildpunkte in der Rastermasche des Rasters entsprechen. Bei der Erzeugung der Einzel-Bitmaps wird für jeden Bildpunkt innerhalb einer Rastermasche durch eine entsprechende Adressierung des Schwellwert-Speichers (19) derjenigen Schwellwert aufgerufen, dessen Lage innerhalb des Schwellwert-Speichers (19) der Lage des betreffenden Bildpunktes innerhalb der jeweiligen Rastermasche entspricht. Die in

4

den dem Schwellwert-Speicher (19) aufgerufenen Schwellwerte werden in den Komparatoren (20) bildpunktweise mit den zugehörigen Farbauszugswerten verglichen und aus dem Vergleich die entsprechenden Steuerbits mit den Zuständen "0" oder "1" abgeleitet. Beispielsweise wird "0" für Farbauszugswerte $\geq$ Schwellwert und "1" für Farbauszugswerte $\leq$ Schwellwert gesetzt, wobei nicht mit Schwellwerten besetzte Matrixelemente der Schwellwert-Matrix in der Bitmap mit "0" belegt werden.

Bei dem angenommenen Wertebereich für die Original-Farbauszugswerte (C,M,Y,K) von 0 bis 63 besteht jede in den Schwellwert-Speichern (19) der vier Raster-Generatoren (4, 5, 6, 14) abgespeicherte Schwellwert-Matrix aus 8 x 8 Matrixelementen. In dem ersten Ausführungsbeispiel, bei dem die Wertebereiche der Farbauszugswerte (C, M, Y) der bunten Druckfarben in den Korrektur-Stufen (1, 2, 3) begrenzt wurden, sind in der Schwellwert-Matrix relevante Schwellwerte verteilt, wobei in den drei Schwellwert-Matrizen der bunten Druckfarben "Cyan", "Magenta" und "Gelb" sichergestellt ist, daß Matrixelemente, die in einer der drei Schwellwert-Matrizen mit einem Schwellwert belegt sind, in den anderen beiden Schwellwert-Matrizen nicht mit Schwellwerten besetzt sind. Diese Forderung resultiert, wie bereits zuvor erläutert, daraus, daß gedruckte Bildpunkte der drei bunten Druckfarben "Cyan", "Magenta" und "Gelb" nebeneinander liegen sollen, um eine Addition von Helligkeiten zu erreichen.

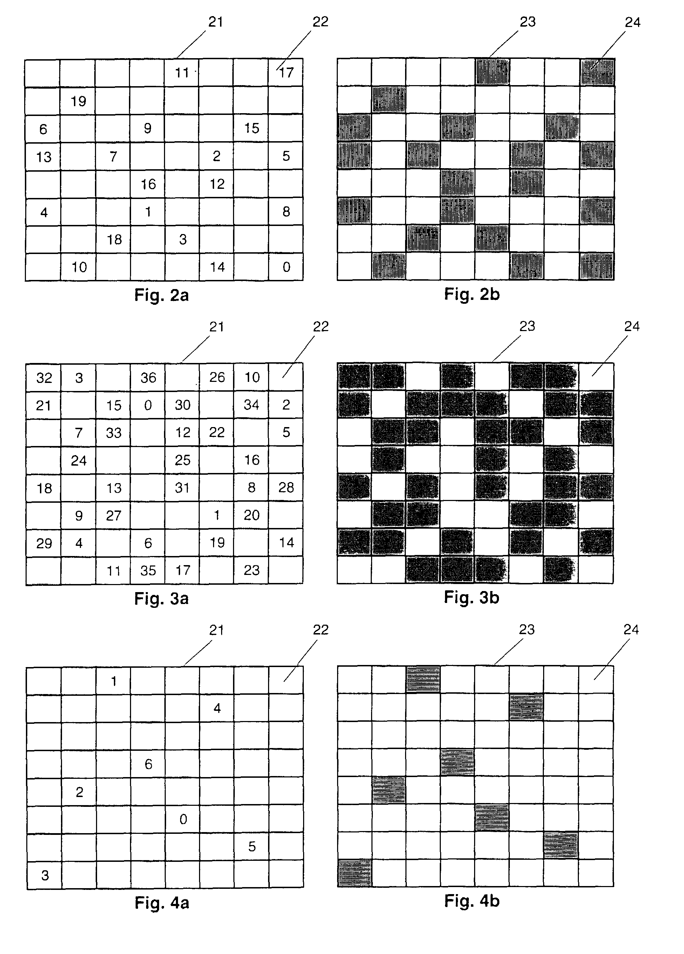

Der Aufbau der Schwellwert-Matrizen und der Einzel-Bitmaps der drei bunten Druckfarben "Cyan", "Magenta" und "Gelb" für die Einrichtung nach Fig. 1 wird anhand von grafischen Darstellungen in den Fig. 2, 3 und 4 erläutert.

Fig. 2a und 2b zeigen die Schwellwert-Matrix (21) und die zugehörige Einzel-Bitmap (23) der Druckfarbe "Cyan" für den maximalen Farbauszugswert C = 63 (100%). In Fig. 2a ist die Schwellwert-Matrix (21) mit den 8 x 8 Matrixelementen (22) dargestellt. In der Schwellwert-Matrix (21) sind beliebig ausgewählten Matrixelementen (22) die relevanten Schwellwerte von 0 bis 19 entsprechend dem begrenzten Wertebereich für die Farbauszugswerte "Cyan" zugeordnet, während die restlichen Matrixelemente (22) nicht besetzt sind. Fig. 2b zeigt die Bitmap (23) aus 8 x 8 Speicherplätzen (24) für eine aus 8 x 8 Bildpunkten bestehende Rastermasche des Rasters für den maximalen Farbauszugswert C = 63 (100%), der dem reduzierten Farbauszugswert $C_{KOR}$ = 19,2 entspricht. Für den reduzierten Farbauszugswert $C_{KOR}$ = 19,2 sind im vorliegenden Fall 20 Speicherplätze (24) der Bitmap (23) mit "1" gesetzt, die durch ein Muster markiert sind. Für kleinere reduzierte Farbauszugswerte ($C_{KOR}$) würden entsprechend weniger Speicherplätze (24) der Bitmap (23) mit "1" belegt sein. Beispielsweise wären für den reduzierten Farbauszugswert $C_{KOR}$ = 9,6 (50%) 10 Speicherplätze (24) belegt, denen in der Schwellwert-Matrix (21) die mit den Schwellwerten < 10 belegten Matrixelemente (22) entsprechen.

Fig. 3a und 3b zeigen die Schwellwert-Matrix (21) und die zugehörige Einzel-Bitmap (23) der Druckfarbe "Magenta" für den maximalen Farbauszugswert M = 63 (100%), der dem reduzierten Farbauszugswert $M_{KOR}$ = 37,8 entspricht. In der Schwellwert-Matrix (21) für "Magenta" sind wiederum die relevanten Schwellwerte von 0 bis 36 eingetragen. Für den reduzierten Farbauszugswert $M_{KOR}$ = 37,8 sind im vorliegenden Fall 37 Speicherplätze (24) der Bitmap (23) mit "1" gesetzt. Für kleinere reduzierte Farbauszugswerte ($M_{KOR}$) würden wiederum entsprechend weniger Speicherplätze (24) der Bitmap (23) mit "1" belegt sein. Beispielsweise wären für den reduzierten Farbauszugswert $M_{KOR}$ = 18,9 (50%) 19 Speicherplätze (24) belegt, denen in der Schwellwert-Matrix (21) die mit den Schwellwerten < 20 belegten Matrixelemente (22) entsprechen.

Fig. 4a und 4b zeigen die Schwellwert-Matrix (21) und die zugehörige Einzel-Bitmap (23) der Druckfarbe "Gelb" für den maximalen Farbauszugswert Y = 63 (100%), der dem reduzierten Farbauszugswert $Y_{KOR}$ = 7,04 entspricht. In der Schwellwert-Matrix (21) für "Gelb" sind ebenfalls die relevanten Schwellwerte von 0 bis 6 eingetragen. Für den reduzierten Farbauszugswert $Y_{KOR}$ = 7,04 sind im vorliegenden Fall 7 Speicherplätze (24) der Bitmap (23) mit "1" gesetzt. Für kleinere reduzierte Farbauszugswerte ($Y_{KOR}$) würden entsprechend weniger Speicherplätze (24) der Bitmap (23) mit "1" belegt sein. Beispielsweise wären für den reduzierten Farbauszugswert $Y_{KOR}$ = 3,52 (50%) 4 Speicherplätze (24) belegt, denen in der Schwellwert-Matrix (21) die mit den Schwellwerten < 3 belegten Matrixelemente (22) entsprechen

Der Vergleich der Schwellwert-Matritzen (21) der drei bunten Druckfarben "Cyan", "Magenta" und "Gelb" nach den Fig. 2a, 3a und 4a zeigt, daß Matrixelemente (22) , die in einer der drei Schwellwert-Matrizen (21) mit einem Schwellwert belegt sind, in den anderen beiden Schwellwert-Matrizen (21) nicht besetzt sind. Diese Forderung resultiert, wie bereits zuvor erläutert, daraus, daß Bildpunkte der drei bunten Druckfarben "Cyan", "Magenta" und "Gelb" in dem Grau-Composite-Proof nebeneinander gedruckt werden.

In der Schwellwert-Matrix (21) der Druckfarbe "Schwarz" sind die Schwellwerte von 0 bis 63 über die 8 x 8 Matrixelemente (22) verteilt. Bei einem Farbauszugswert K = 63 (100%) sind in der Einzel-Bitmap alle 8 x 8 Speicherplätze mit "1" gesetzt, während bei einem Farbauszugswert K = 31,5 (50%) nur die Hälfte der Speicherplätze (24) mit "1" belegt sein würden. Da in der Schwellwert-Matrix (21) für die Druckfarbe "Schwarz" Matrixelemente (22) mit Schwellwerten belegt sind, die auch in den Schwellwert-Matrizen (21) der bunten Druckfarben besetzt sind, werden Bildpunkte der Druckfarbe "Schwarz" im Grau-Composite-Proof über Bildpunkte der bunten Druckfarben gedruckt. Die Schwellwert-Verteilung innerhalb der Schwellwert-Matrix (21) für die Druckfarbe "Schwarz" wird in zweckmäßiger Weise derart durchgeführt, daß bei einem Farbauszugswert K = 31,5 (50%) in einer Rastermasche ca. die Hälfte der gedruckten Bildpunkte der Druckfarbe "Schwarz" auf bereits gedruckte Bildpunkte der bunten Druckfarben fallen und die andere Hälfte auf noch "freie" Bildpunkte der Rastermasche. Auf diese Weise wird ein subjektiv als richtig empfundener Helligkeitswert von ca. 75% im Grau-Composite-Proof wiedergegeben, der auch dem Helligkeitseindruck beim konventionellen Vierfarbendruck entspricht.

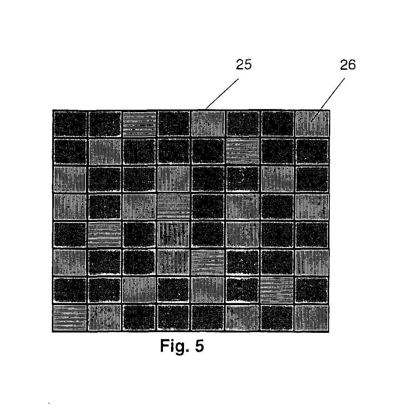

Fig. 5 zeigt die durch die ODER-Verknüpfung der Einzel-Bitmaps (23) in der Verknüpfungs-Stufe (17) erzeugte Gesamt-Bitmap (25) mit 8 x 8 = 64 Speicherplätzen (26) bzw. eine Rastermasche aus 8 x 8 = 64 Bildpunkten des Rasters im Grau-Composite-Proof für die Farbauszugswerte C = M = Y = 63 (100%) ohne Berücksichtigung der Druckfarbe "Schwarz". Es ist ersichtlich, daß in der Rastermasche entsprechend den zuvor erläuterten Korrektorfaktoren $L_C$ = 0,30, $L_M$ = 0,59 und $L_Y$ = 0,11 von den 64 Bildpunkten der Rastermasche ca. 30% der Bildpunkte für die Druckfarbe "Cyan", ca. 59% der Bildpunkte für die Druckfarbe "Magenta" und ca. 11% der Bildpunkte für die Druckfarbe "Gelb" gedruckt sind, wobei die den einzelnen bunten Druckfarben zugeordneten Bildpunkte nebeneinander liegen. Diese Rastermasche gibt insgesamt einen Helligkeitseindruck von 100% wieder, der sich aus den prozentualen Helligkeitsanteilen der bunten Druckfarben zusammensetzt.

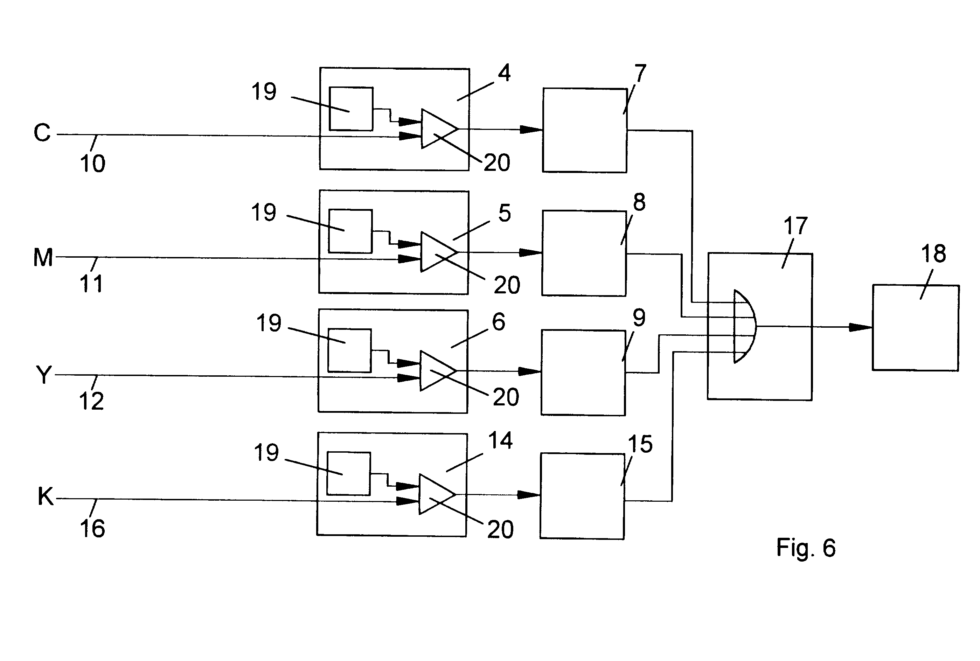

Fig. 6 zeigt ein zweites Ausführungsbeispiel einer Einrichtung zur Erzeugung eines gerasterten Grau-Composite-Proofs in Form eines prinzipiellen Blockschaltbildes. Das zweite Ausführungsbeispiel unterscheidet sich von dem ersten Ausführungsbeispiel dadurch, daß die Korrektur-Stufen (1, 2, 3) in den drei Farbkanälen (10, 11, 12) entfallen. Dadurch werden den Raster-Generatoren (4, 5, 6) in den drei Farbkanälen (10, 11, 12) ebenso wie dem Raster-Generator (14) im Farbkanal (16) die unkorrigierten Farbauszugswerte (C, M, Y, K) mit dem Wertebereich von 0 bis 63 zugeführt und in entsprechende Einzel-Bitmaps für die Druckfarben "Cyan", "Magenta", "Gelb" und "Schwarz" umgewandelt.

Um ein Grau-Composite-Proof mit einem für die Vorabkontrolle richtigen Helligkeitseindruck aufzeichnen zu können, müssen die aufzuzeichnenden Grauwerte der drei bunten Druckfarben "Cyan", "Magenta" und "Gelb" gegenüber den Original-Grauwerten wiederum auf unterschiedliche prozentuale Anteile entsprechend den Korrekturfaktoren ($L_C$, $L_M$, $L_Y$) gemäß Gleichungen [1] reduziert werden. Während hierzu im ersten Ausführungsbeispiel eine Begrenzung der Wertebereiche der Farbauszugswerte (C, M, Y) der bunten Druckfarben in den Korrektur-Stufen (1, 2, 3) durchgeführt wird, werden im zweiten Ausführungsbeispiel die Schwellwert-Matrizen (21) für die bunten Druckfarben in den Schwellwert-Speichern (19) der Raster-Generatoren (4, 5, 6) gegenüber den Schwellwert-Matrizen des ersten Ausführungsbeispiels modifiziert. Die Modifizierung besteht darin, daß die drei Schwellwert-Matrizen (21) der bunten Druckfarben jeweils mit einer unterschiedlichen Anzahl von Schwellwerten aus dem vollen Schwellwert-Bereich von 0 bis 63 belegt sind, wobei die Korrekturfaktoren $L_C$ = 0,30, $L_M$ = 0,59 und $L_Y$ = 0,11 jeweils die Anzahl der mit Schwellwerten belegten Matrixelemente (22) bezogen auf die Gesamtanzahl der vorhandenen 8 x 8 = 64 Matrix-elemente (2) wiederspiegeln.

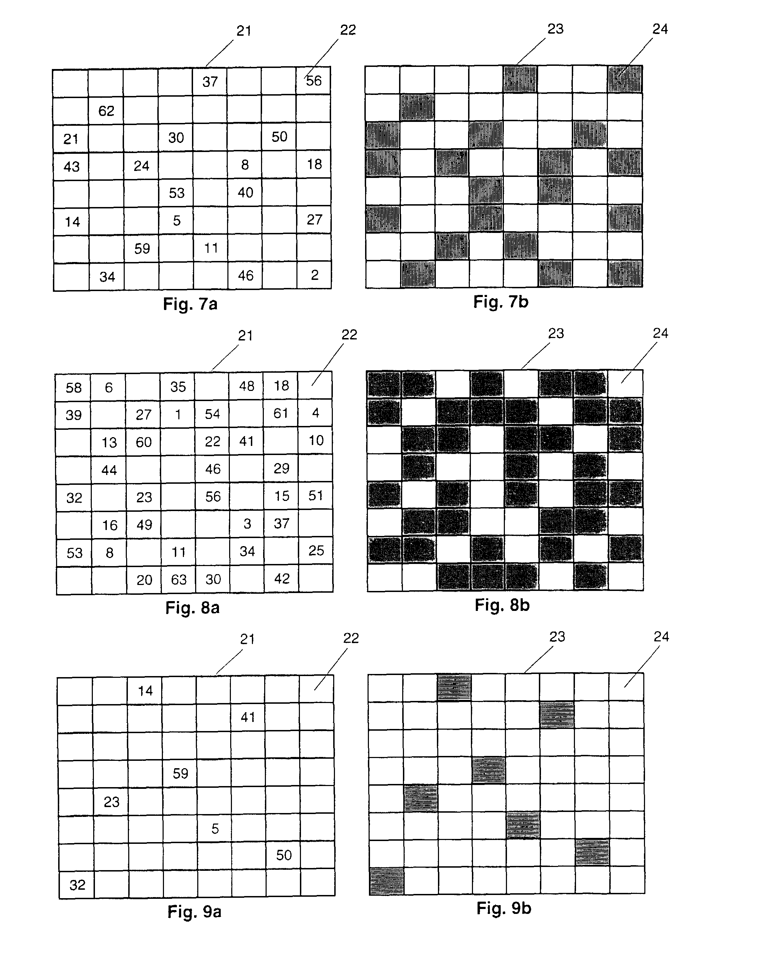

Der Aufbau der Schwellwert-Matrizen (21) und der Einzel-Bitmaps (23) der drei bunten Druckfarben "Cyan", "Magenta" und "Gelb" für die Einrichtung nach Fig. 6 wird anhand von grafischen Darstellungen in den Fig. 7, 8 und 9 erläutert.

Die Fig. 7a und 7b zeigen die Schwellwert-Matrix (21) und die zugehörige Einzel-Bitmap (23) der Druckfarbe "Cyan" für den maximalen Farbauszugswert C = 63 (100%). In Fig. 7a ist die Schwellwert-Matrix (21) mit den 8 x 8 Matrixelementen (22) dargestellt. In der Schwellwert-Matrix (21) sind ca. 30% der Matrixelemente (22), nämlich 20 der 64 Matrixelemente (21) mit nahezu gleichabständigen 20 Schwellwerten des Schwellwert-Bereiches zwischen 0 und 63 belegt. Fig. 7b zeigt die zugehörige Einzel-Bitmap (23) aus 8 x 8 Speicherplätzen (24) für eine aus 8 x 8 Bildpunkten bestehende Rastermasche des Rasters. In der Einzel-Bitmap (23) sind für den maximalen Farbauszugswert C = 63 (100%) 20 Speicherplätze (24) mit "1" belegt, während für einen Farbauszugswert C = 31,5 (50%) nur 10 Speicherplätze besetzt sein würden.

Die Fig. 8a und 8b zeigen die Schwellwert-Matrix (21) und die zugehörige Einzel-Bitmap (23) der Druckfarbe "Magenta" für den maximalen Farbauszugswert M = 63 (100%). In der Schwellwert-Matrix (21) nach Fig. 8a sind ca. 59% der Matrixelemente (22), nämlich 37 der 64 Matrixelemente (21) mit nahezu gleichabständigen 37 Schwellwerten des Schwellwert-Bereiches zwischen 0 und 63 belegt. Fig. 8b zeigt die zugehörige Einzel-Bitmap (23) für den maximalen Farbauszugswert M = 63 (100%), in der 37 Speicherplätze (24) mit "1" besetzt sind, während für einen Farbauszugswert M = 31,5 (50%) nur 19 Speicherplätze (24) besetzt sein würden.

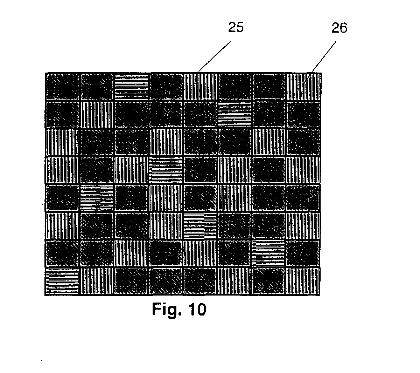

Die Fig. 9a und 9b zeigen die Schwellwert-Matrix (21) und die zugehörige Einzel-Bitmap (23) der Druckfarbe "Gelb" für den maximalen Farbauszugswert Y = 63 (100%). In der Schwellwert-Matrix (21) nach Fig. 9a sind ca. 11% der Matrixelemente (22), nämlich 7 der 64 Matrixelemente (21) mit 7 nahezu gleichabständigen Schwellwerten des Schwellwert-Bereiches zwischen 0 und 63 belegt. Fig. 9b zeigt die zugehörige Einzel-Bitmap (23) für den maximalen Farbauszugswert Y = 63 (100%), in der 7 Speicherplätze (24) mit "1" besetzt sind, während für einen Farbauszugswert Y = 31,5 (50%) nur 3 Speicherplätze (24) belegt sein würden.

Fig. 10 zeigt wiederum die durch die ODER-Verknüpfung der Einzel-Bitmaps (21) in der Verknüpfungs-Stufe (17) erzeugte Gesamt-Bitmap (25) mit 8 x 8 = 64 Speicherplätzen (26) bzw. eine Rastermasche aus 8 x 8 = 64 Bildpunkten des Rasters im Grau-Composite-Proof für die Farbauszugswerte C = M = Y = 63 (100%) ohne Berücksichtigung der Druckfarbe "Schwarz".

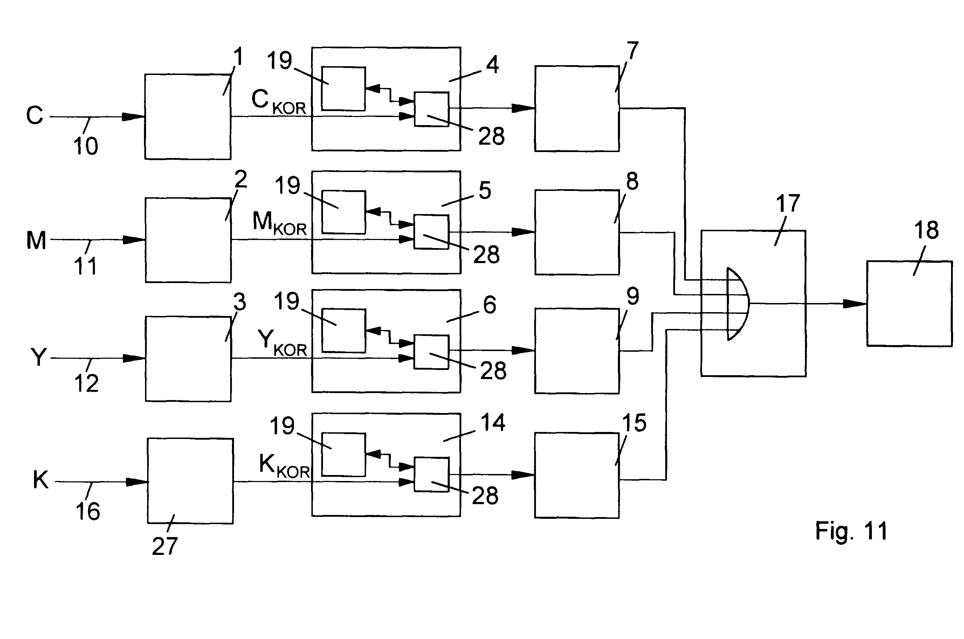

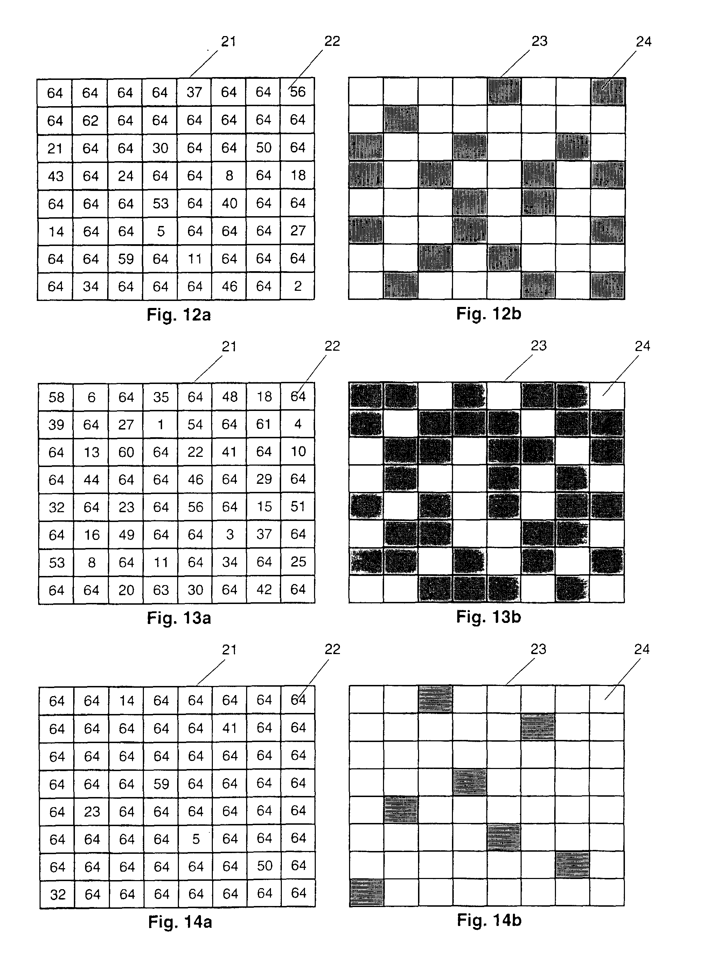

Fig. 11 zeigt ein drittes Ausführungsbeispiel einer Einrichtung zur Erzeugung eines gerasterten Grau-Composite-Proofs in Form eines prinzipiellen Blockschaltbildes. Das dritte Ausführungsbeispiel unterscheidet sich von der Einrichtung nach Fig. 1 durch geänderte Raster-Generatoren (4, 5, 6, 14) und durch eine zusätzliche Korrektur-Stufe (27) im Farbkanal (16) für die Farbauszugswerte (K). Die Raster-Generatoren (4, 5, 6, 14) der Einrichtung nach Fig. 1 enthalten Schwellwert-Speicher (19) und Komparatoren (20), und die Einzel-Bitmaps werden durch Vergleich der in den Schwellwert-Speichern (19) abgelegten Schwellwerte mit den Farbauszugswerten in den Komparatoren (20) generiert. Die geänderten Raster-Generatoren (4, 5, 6, 14) der Einrichtung nach Fig. 11 enthalten Schwellwert-Speicher (19) mit modifizierten Schwellwert-Matrizen (21) und anstelle der Komparatoren (20) Auswerte-Stufen (28) zur Generierung der Einzel-Bitmaps. Die modifizierten Schwellwert-Matrizen (21) der bunten Druckfarben sind in den Fig. 12a, 13a und 14a grafisch dargestellt. Die modifizierten Schwellwert-Matrizen (21) weisen jeweils eine Verteilung von relevanten Schwellwerten aus dem Schwellwert-Bereich von 0 bis 63 auf, die der in den Fig. 7a, 8a und 9a dargestellten Schwellwert-Verteilung entspricht, jedoch sind in den modifizierten Schwellwert-Matrizen (21) die nicht mit relevanten Schwellwerten besetzen Matrixelemente (21) mit außerhalb des Schwellwert-Bereiches liegenden Schwellwerten belegt, beispielsweise mit dem Schwellwert 64. Zur Generierung einer Einzel-Bitmap überprüft die Auswerte-Stufe (28) für jeden Farbauszugswert C bzw. M, Y, K = n die Schwellwerte in dem Schwellwert-Speicher (19), sucht die kleinsten n Schwellwerte einschließlich der Ortskoordinaten der Matrixelemente (22) in der Schwellwert-Matrix (21) heraus und setzt die den Ortskoordinaten der herausgesuchten Schwellwerte entsprechenden Speicherplätze (24) der Einzel-Bitmap (23) auf "1".

Der Aufbau der modifizierten Schwellwert-Matrizen (21) und der Einzel-Bitmaps (23) der drei bunten Druckfarben "Cyan", "Magenta" und "Gelb" für die Einrichtung nach Fig. 11 wird anhand von grafischen Darstellungen in den Fig. 12, 13 und 14 erläutert.

Die Fig. 12a und 12b zeigen die Schwellwert-Matrix (21) und die zugehörige Einzel-Bitmap (23) der Druckfarbe "Cyan" für den maximalen Farbauszugswert C = 63 (100%). In Fig. 7a ist die Schwellwert-Matrix (21) mit den 8 x 8 Matrixelementen (22) dargestellt. In der Schwellwert-Matrix (21) sind ca. 30% der Matrixelemente (22), nämlich 20 der 64 Matrixelemente (21) mit nahezu gleichabständigen 20 relevanten Schwellwerten des Schwellwert-Bereiches zwischen 0 und 63 belegt, während die nicht mit relevanten Schwellwerten belegten Matrixelemente (22) mit dem Schwellwert 64 aufgefüllt sind. Fig. 12b zeigt die zugehörige Einzel-Bitmap (23) aus 8 x 8 Speicherplätzen (24) für eine aus 8 x 8 Bildpunkten bestehende Rastermasche des Rasters. In der Einzel-Bitmap (23) sind für den maximalen Farbauszugswert C = 63 (100%) 20 Speicherplätze (24) mit "1" belegt.

Die Fig. 13a und 13b zeigen die Schwellwert-Matrix (21) und die zugehörige Einzel-Bitmap (23) der Druckfarbe "Magenta" für den maximalen Farbauszugswert M = 63 (100%). In der Schwellwert-Matrix (21) nach Fig. 13a sind ca. 59% der Matrixelemente (22), nämlich 37 der 64 Matrixelemente (21) mit nahezu gleichabständigen 37 Schwellwerten des Schwellwert-Bereiches zwischen 0 und 63 belegt, während die restlichen Matrixelemente (22) wiederum mit dem Schwellwerten 64 aufgefüllt sind. Fig. 13b zeigt die zugehörige Einzel-Bitmap (23) für den maximalen Farbauszugswert M = 63 (100%), in der 37 Speicherplätze (24) mit "1" besetzt sind.

Die Fig. 14a und 14b zeigen die Schwellwert-Matrix (21) und die zugehörige Einzel-Bitmap (23) der Druckfarbe "Gelb" für den maximalen Farbauszugswert Y = 63 (100%). In der Schwellwert-Matrix (21) nach Fig. 14a sind ca. 11% der Matrixelemente (22), nämlich 7 der 64 Matrixelemente (21) mit 7 nahezu gleichabständigen Schwellwerten des Schwellwert-Bereiches zwischen 0 und 63 belegt, während die restlichen Matrixelemente (22) wiederum mit den Schwellwerten 64 aufgefüllt sind. Fig. 14b zeigt die zugehörige Einzel-Bitmap (23) für den maximalen Farbauszugswert Y = 63 (100%), in der 7 Speicherplätze (24) mit "1" besetzt sind.

Ein Vergleich der Fig. 2b, 3b, 4b mit den Fig. 7b, 8b, 9b bzw. 14a, 14b und 14c zeigt, daß die mit den Einrichtungen nach Fig. 1, Fig. 6 und Fig. 11 erzeugten Einzel-Bitmaps (23) und damit auch die Gesamt-Bitmap bzw. das Druckergebnis identisch sind.

In den Einzel-Bitmaps (23) der Fig. 2b, 3b, 4b, 7b, 8b, 9b, 14a, 14b und 14c sind die Steuerbits über die ganze Fläche der Bitmap verteilt. Dementsprechend liegen auch die gedruckten Bildpunkte verteilt über eine Rastermasche des Rasters auf dem Grau-Composite-Proof, was einer frequenzmodulierten Rasterung entspricht.

Durch Aufteilung der Schwellwert-Matrizen (21) in für die drei bunten Druckfarben repräsentative Bereiche, die sich nicht überlappen, und durch eine entsprechende Füllung der einzelnen Bereiche mit Schwellwerten, lassen sich auch kompakte Rasterpunkte aus mehreren nebeneinander liegenden gedruckten Bildpunkte erzeugen.

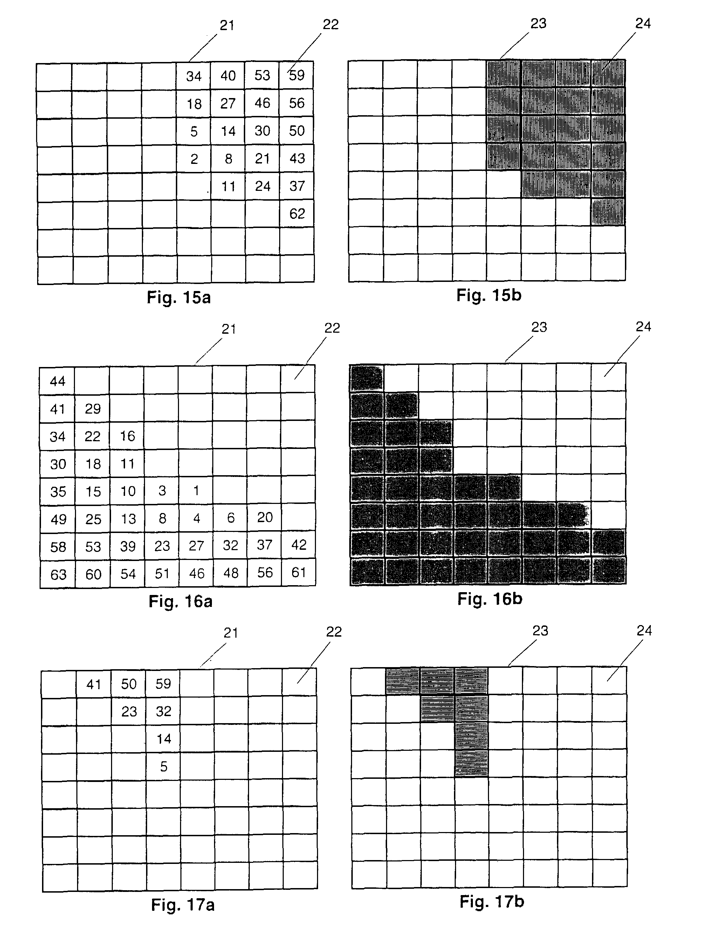

Der Aufbau der Schwellwert-Matrizen (21) und der Einzel-Bitmaps (23) der drei bunten Druckfarben "Cyan", "Magenta" und "Gelb" zur Erzeugung von kompakten Rasterpunkten wird anhand von grafischen Darstellungen in den Fig. 15, 16 und 17 erläutert.

Die Fig. 15a und 15b zeigen die Schwellwert-Matrix (21) und die zugehörige Einzel-Bitmap (23) der Druckfarbe "Cyan" für den maximalen Farbauszugswert C = 63 (100%). In Fig. 15a ist die Schwellwert-Matrix (21) mit den 8 x 8 Matrixelementen (22) dargestellt. In der Schwellwert-Matrix (21) sind innerhalb eines abgegrenzten ersten Matrix-Bereiches ca. 30% der Matrixelemente (22), nämlich 20 der 64 Matrixelemente (21) mit nahezu gleichabständigen 20 Schwellwerten des Schwellwert-Bereiches zwischen 0 und 63 belegt. Fig. 15b zeigt die zugehörige Einzel-Bitmap (23) aus 8 x 8 Speicherplätzen (24) für eine aus 8 x 8 Bildpunkten bestehende Rastermasche des Rasters. In der Einzel-Bitmap (23) sind für den maximalen Farbauszugswert C = 63 (100%) 20 Speicherplätze (24) mit "1" innerhalb eines ersten Speicherbereiches belegt, der lagemäßig der dem ersten Matrix-Bereich entspricht.

Die Fig. 16a und 16b zeigen die Schwellwert-Matrix (21) und die zugehörige Einzel-Bitmap (23) der Druckfarbe "Magenta" für den maximalen Farbauszugswert M = 63 (100%). In der Schwellwert-Matrix (21) nach Fig. 16a sind innerhalb eines abgegrenzten zweiten Matrix-Bereiches, der sich lagemäßig von dem ersten Matrix-Bereich unterscheidet, ca. 59% der Matrixelemente (22), nämlich 37 der 64 Matrixelemente (21) mit nahezu gleichabständigen 37 Schwellwerten des Schwellwert-Bereiches zwischen 0 und 63 belegt. Fig. 16b zeigt die zugehörige Einzel-Bitmap (23) für den maximalen Farbauszugswert M = 63 (100%), in der 37 Speicherplätze (24) mit "1" innerhalb eines zweiten Speicherbereiches besetzt sind, der lagemäßig dem zweiten Matrix-Bereich entspricht.

Die Fig. 17a und 17b zeigen die Schwellwert-Matrix (21) und die zugehörige Einzel-Bitmap (23) der Druckfarbe "Gelb" für den maximalen Farbauszugswert Y = 63 (100%). In der Schwellwert-Matrix (21) nach Fig. 17a sind innerhalb eines abgegrenzten dritten Matrix-Bereiches, der sich wiederum lagemäßig von dem ersten und zweiten Matrix-Bereich unterscheidet, ca. 11% der Matrixelemente (22), nämlich 7 der 64 Matrixelemente (21) mit 7 nahezu gleichabständigen Schwellwerten des Schwellwert-Bereiches zwischen 0 und 63 belegt. Fig. 17b zeigt die zugehörige Einzel-Bitmap (23) für den maximalen Farbauszugswert Y = 63 (100%), in der 7 Speicherplätze (24) mit "1" innerhalb eines dritten Speicherbereiches besetzt sind, der lagemäßig dem dritten Matrix-Bereich entspricht.

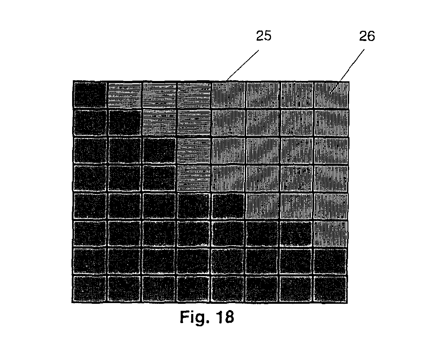

Fig. 18 zeigt wiederum die durch die ODER-Verknüpfung der Einzel-Bitmaps (21) in der Verknüpfungs-Stufe (17) erzeugte Gesamt-Bitmap (25) mit 8 x 8 = 64 Speicherplätzen (26) bzw. eine Rastermasche aus 8 x 8 = 64 Bildpunkten des Rasters im Grau-Composite-Proof für die Farbauszugswerte C = M = Y = 63 (100%) ohne Berücksichtigung der Druckfarbe "Schwarz". In der Rastermasche sind 64 nebeneinander liegenden Bildpunkte gedruckt, von denen 20 Bildpunkte der Druckfarbe "Cyan", 53 Bildpunkte der Druckfarbe "Magenta" und 7 Bildpunkte der Druckfarbe "Gelb" zugeordnet sind. Der Rasterpunkt setzt sich somit aus drei Teilflächen für die Druckfarben "Cyan", "Magenta" und "Gelb" zusammen, wobei die prozentualen Anteile der Teilflächen an der Gesamtfläche der Rastermasche den Korrekturfaktoren ($L_C$, $L_M$, $L_Y$) entsprechen.

Die in den Fig. 1, 6 und 7 beschriebenen Einrichtungen zur Erzeugung eines gerasterten Grau-Composite-Proofs weisen jeweils vier Farbkanäle auf, in denen die Farbbauszugswerte (C, M, Y, K) parallel verarbeitet und die generierten Einzel-Bitmaps gleichzeitig in den Bitmap-Speichern (7, 8, 9, 15) zwischengespeichert werden. Zur Vereinfachung können die Einrichtungen sebstverständlich auch einkanalig mit einem Raster-Generator und gegebenenfalls einer vorgeschalteten Korrektur-Stufe ausgeführt sein. In diesem Falle werden die Farbauszugswerte (C, M, Y, K) seriell verarbeitet, wobei jeweils die entsprechenden Korrekturfaktoren ($L_C$, $L_M$, $L_Y$) in die Korrekturwert-Stufe und die Schwellwert-Matrizen der einzelnen Druckfarben nacheinander in den Schwellwert-Speicher des Raster-Generators geladen werden.

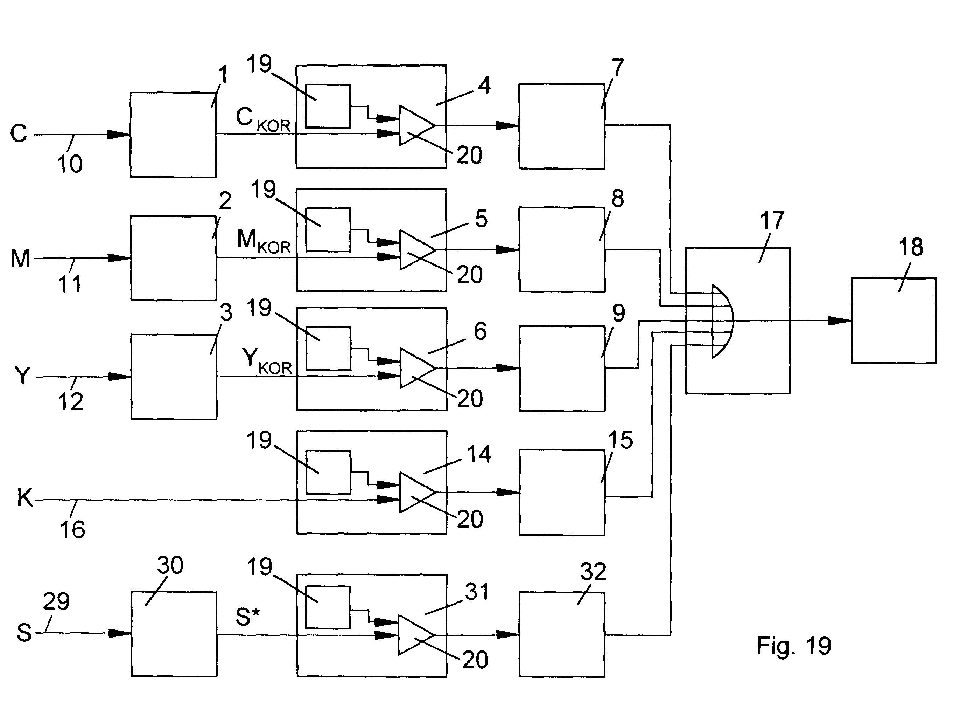

Fig. 19 zeigt eine vorteilhafte Weiterbildung der Einrichtung nach Fig. 1, bei der in dem Grau-Composite-Proof zusätzlich Schmuckfarben berücksichtigt werden. Zur zusätzlichen Verarbeitung der Farbauszugswerte (S) einer Schmuckfarbe (Sonderfarbe) ist die Einrichtung nach Fig. 1 um einen fünften Farbkanal (29) erweitert, der eine Rechen-Stufe (30), einen weiteren Raster-Generator (31) mit nachgeschaltetem Bitmap-Speicher (32) enthält. Eine Schmuckfarbe ist eine Farbe, die nicht durch Übereinanderdruck der bunten Druckfarben "Cyan", "Magenta" und "Gelb" entsteht, sondern für sich ermischt und zusätzlich mit einer separaten Druckform gedruckt wird. Eine solche Schmuckfarbe ist z.B. ein "Goldton".

In der Rechen-Stufe (30) werden die Farbauszugswerte (S) der Schmuckfarbe zunächst in modifizierte Farbauszugswerte (S*) umgewandelt. Aus den modifizierten Farbauszugswerten (S*) wird in dem Raster-Generator (31) die Einzel-Bitmap für die Schmuckfarbe generiert, die in dem Bitmap-Speicher (32) zwischengespeichert wird. Der Raster-Generator (31) enthält die gleiche Schwellwert-Matrix wie der Raster-Generator (14) für die Druckfarbe "Schwarz". Die Einzel-Bitmap der Schmuckfarbe wird dann zusammen mit den vier anderen Bitmaps der Druckfarben "Cyan", "Magenta", "Gelb" und "Schwarz" in der Verknüpfungs-Stufe (17) durch die ODER-Verknüpfung zur der Gesamt-Bitmap vereinigt. Eine Schmuckfarbe liegt in einem zu reproduzierenden Farbbild normalerweise an einer anderen Bildstelle als die Farben, die durch die bunten Druckfarben wiedergegeben werden. Aus diesem Grunde weist ein Bildpunkt nicht gleichzeitig die Farbauszugswerte (S) einer Schmuckfarbe und die Farbauszugswerte (Y,M,Y) der bunten Druckfarben auf, so daß in der Verknüpfungs-Stufe (17) eine echte ODER-Verknüpfung erfolgt, wodurch die Bildpunkte der Schmuckfarbe in dem Grau-Composite-Proof ebenfalls neben den Bildpunkten der bunten Druckfarben gedruckt werden.

In der Rechen-Stufe (30) werden die Farbauszugswerte (S) einer Schmuckfarbe zunächst in entsprechende Farbauszugswerte ($C_S$, $M_S$, $Y_S$, $K_S$) der Druckfarben "Cyan", "Magenta", "Gelb" und "Schwarz" umgewandelt. Diese Umwandlung erfolgt beispielsweise anhand einer abgespeicherten Farb-Tabelle, der für eine Schmuckfarbe diejenigen Farbauszugswerte ($C_S$, $M_S$, $Y_S$, $K_S$) der Druckfarben "Cyan", "Magenta", "Gelb" und "Schwarz" entnommen werden, welche die Sonderfarbe annähernd wiedergeben. Die Farbauszugswerte ($C_S$, $M_S$, $Y_S$) der bunten Druckfarben "Cyan", "Magenta" und "Gelb" werden durch Muliplikation mit den Korrekturfaktoren ($L_C$, $L_M$, $L_Y$) wertemäßig reduziert. Durch Addition der reduzierten Farbauszugswerte ($C_S$, $M_S$, $Y_S$) wird ein äquivalenter Grauwert $G_S = C_S + M_S + Y_S$ gebildet. Der äquivalente Grauwert $G_S$ wird dann mit dem Farbauszugswert ($K_S$) für die Druckfarbe "Schwarz" multipliziert, um das Produkt $G_S \times K_S$ zu erhalten. Zur Bildung des modifizierten Farbauszugswertes ($S^*$) der Schmuckfarbe werden abschließend der äquivalente Grauwert $G_S$, der Farbauszugswert ($K_S$) für die Druckfarbe "Schwarz" und das Produkt $G_S \times K_S$ addiert. Danach ergeben sich der modifizierten Farbauszugswerte ($S^*$) nach Gleichung [2] zu:

$$S^* = (C_S + M_S + Y_S + K_S) + K_S \times (C_S + M_S + Y_S) \qquad [2]$$

Die Erweiterung zur zusätzlichen Verarbeitung von Schmuckfarben kann selbstverständlich auch bei den Einrichtungen nach Fig. 6 und Fig. 11 verwendet werden.

Es liegt im Rahmen der Erfindung, anstelle von Farbauszugswerten PostScriptcodierte Farbwerte zu verwenden. In diesem Fall werden die PostScrip-codierten Farbwerte zunächst in einem PostScript-Interpreter decodiert und dann die decodierten Farbwerte seriell weiterverarbeitet.

## Patentansprüche

1. Verfahren zur Erzeugung eines gerasterten Grau-Composite-Proofs zur Vorabkontrolle des Farbdrucks eines Farbbildes, bei dem

   - die Farbauszugswerte (C, M, Y, K) der Farbauszüge "Cyan", "Magenta", "Gelb" und "Schwarz" des Farbildes erzeugt werden,
   - ein Aufzeichnungsmaterial in Bildpunkte unterteilt wird,
   - die Farbauszugswerte (C, M, Y, K) nach einer Raster-Funktion in den Bildpunkten zugeordnete Steuerbits in Form einer Bitmap umgewandelt werden und
   - der Proof bildpunkt- und zeilenweise auf dem Aufzeichnungsmaterial aufgezeichnet wird, wobei die Steuerbits der Bitmap bei der Aufzeichung bestimmen, ob die Bildpunkte als Rasterpunkte oder Teile eines Rasterpunktes aufgezeichnet oder nicht aufgezeichnet werden, **dadurch gekennzeichnet**, daß
   - die auf dem Grau-Composite-Proof aufzuzeichnenden Grauwerte gegenüber den durch die Farbauszugswerte (C, M, Y) repräsentierten Grauwerten der bunten Druckfarben "Cyan", "Magenta" und "Gelb" für den Farbdruck auf unterschiedliche prozentuale Anteile korrigiert werden, die jeweils dem subjektiv empfundenen Helligkeitseindruck der bunten Druckfarben "Cyan", "Magenta" und "Gelb" in Bezug auf die Druckfarbe "Schwarz" entsprechen,
   - die Farbauszugswerte (C, M, Y) der bunten Druckfarben "Cyan", "Magenta" und "Gelb" durch unterschiedliche Raster-Funktionen derart in drei Einzel-Bitmaps umgewandelt werden, daß die aufgezeichneten Bildpunkte der bunten Druckfarben "Cyan", "Magenta" und "Gelb" auf dem Aufzeichnungsmaterial nebeneinander liegen,
   - die Einzel-Bitmaps der bunten Druckfarben "Cyan", "Magenta" und "Gelb" zu einer Gesamt-Bitmap vereinigt werden und
   - die Steuerbits der Gesamt-Bitmap ein Schwarz/Weiß-Aufzeichnungsgerät zur Aufzeichnung des Grau-Composite-Proofs ansteuern, in dem die Farbwerte der bunten Druckfarben "Cyan", "Magenta" und "Gelb" zu helligkeitsäquivalenten Grauwerten vereinigt sind.

2. Verfahren nach Anspruch 1, **dadurch gekennzeichnet,** daß

   - die Farbauszugswerte (K) des Farbauszugs "Schwarz" nach einer Raster-Funktion in eine weitere Einzel-Bitmap umgewandelt werden und
   - die Einzel-Bitmap der Druckfarbe "Schwarz" mit den Einzel-Bitmaps der bunten Druckfarben "Cyan", "Magenta" und "Gelb" zu der Gesamt-Bitmap vereinigt werden.

3. Verfahren nach Anspruch 1 oder 2, **dadurch gekennzeichnet,** daß die Vereinigung der Einzel-Bitmaps zu der Gesamt-Bitmap durch eine logische ODER-Verknüpfung der Steuerbits erfolgt.

4. Verfahren nach einem der Ansprüche 1 bis 3, **dadurch gekennzeichnet,** daß die Steuerbits der Einzel-Bitmaps der Druckfarben jeweils durch Vergleich der Farbauszugswerte (C, M, Y, K) der betreffenden Druckfarben mit den die Raster-Funktion darstellenden Schwellwerten einer Schwellwert-Matrix erzeugt werden.

**5.** Verfahren nach einem der Ansprüche 1 bis 3, **dadurch gekennzeichnet,** daß die Einzel-Bitmaps der Druckfarben jeweils durch eine von den Farbauszugswerten (C, M, Y, K) der betreffenden Druckfarben abhängige Auswahl von die Raster-Funktion darstellenden Schwellwerten einer Schwellwert-Matrix und durch Umwandlung der ausgewählten Schwellwerte in die Steuerbits erzeugt werden.

**6.** Verfahren nach einem der Ansprüche 1 bis 5, **dadurch gekennzeichnet,** daß

- die Schwellwert-Matrizen in Matrixelemente unterteilt sind, die mit Schwellwerten belegbar sind und
- Matrixelemente, die in einer der drei Schwellwert-Matrizen der bunten Druckfarben "Cyan", "Magenta" und "Gelb" mit Schwellwerten belegt sind, in den anderen beiden Schwellwert-Matrizen nicht mit Schwellwerten belegt werden.

**7.** Verfahren nach einem der Ansprüche 1 bis 6, **dadurch gekennzeichnet,** daß

- die Korrektur der im Grau-Composite-Proof aufzuzeichnenden Grauwerte gegenüber den durch die Farbauszugswerte (C, M, Y) repräsentierten Grauwerten der bunten Druckfarben "Cyan", "Magenta" und "Gelb" durch unterschiedliche prozentuale Begrenzungen der Wertebereiche der Farbauszugswerte (C, M, Y) der bunten Druckfarben "Cyan", "Magenta" und "Gelb" durchgeführt wird, wobei die prozentualen Begrenzungen jeweils dem subjektiv empfundenen Helligkeitseindruck der bunten Druckfarben "Cyan", "Magenta" und "Gelb" in Bezug auf die Druckfarbe "Schwarz" entsprechen, und
- die korrigierten Farbauszugswerte ($C_{KOR}$, $M_{KOR}$, $Y_{KOR}$) über die Raster-Funktionen in die Einzel-Bitmaps der bunten Druckfarben "Cyan", "Magenta" und "Gelb" umgewandelt werden .

**8.** Verfahren nach einem der Ansprüche 1 bis 6, **dadurch gekennzeichnet,** daß

- die Korrektur der im Grau-Composite-Proof aufzuzeichnenden Grauwerte gegenüber den durch die Farbauszugswerte (C, M, Y) repräsentierten Grauwerten der bunten Druckfarben "Cyan", "Magenta" und "Gelb" jeweils durch eine unterschiedliche Anzahl von Schwellwerten innerhalb der Schwellwert-Matrizen der bunten Druckfarben "Cyan", "Magenta" und "Gelb" durchgeführt wird, wobei die jeweilige unterschiedlichen Anzahl von Schwellwerten nach dem subjektiv empfundenen Helligkeitseindruck der bunten Druckfarben "Cyan", "Magenta" und "Gelb" in Bezug auf die Druckfarbe "Schwarz" ermittelt wird und
- die unkorrigierten Farbauszugswerte (C, M, Y) über die Raster-Funktionen in die Einzel-Bitmaps der bunten Druckfarben "Cyan", "Magenta" und "Gelb" umgewandelt werden .

**9.** Verfahren nach einem der Ansprüche 1 bis 8, **dadurch gekennzeichnet,** daß die unterschiedliche Begrenzung der Wertebereiche der Farbauszugswerte (C, M, Y) der bunten Druckfarben "Cyan", "Magenta" und "Gelb" durch Multiplikation der Farbauszugswerte (C, M, Y) mit Korrekturfaktoren ($L_C$, $L_M$, $L_Y$) durchgeführt wird, welche dem subjektiv empfundenen Helligkeitseindruck der bunten Druckfarben "Cyan", "Magenta" und "Gelb" in Bezug auf die Druckfarbe "Schwarz" entsprechen.

**10.** Verfahren nach einem der Ansprüche 1 bis 9, **dadurch gekennzeichnet,** daß

- die Luminanzwerte von gerasterten Volltonflächen der Druckfarben "Cyan", "Magenta", "Gelb" und "Schwarz" ausgemessen werden und
- die Korrekturfaktoren ($L_C$, $L_M$, $L_Y$) den ausgemessenen Luminanzwerten der gerasterten Volltonflächen der Druckfarben "Cyan", "Magenta", "Gelb" bezogen auf den Luminazwert (100%) der gerasterten Volltonfläche der Druckfarbe "Schwarz" entsprechen.

**11.** Verfahren nach einem der Ansprüche 1 bis 10, **dadurch gekennzeichnet,** daß

- die Korrektur der im Grau-Composite-Proof aufzuzeichnenden Grauwerte gegenüber den durch die Farbauszugswerte (C, M, Y) repräsentierten Grauwerten der bunten Druckfarben "Cyan", "Magenta" und "Gelb" durch unterschiedliche prozentuale Begrenzungen der Wertebereiche der Farbauszugswerte (C, M, Y) der bunten Druckfarben "Cyan", "Magenta" und "Gelb" durchgeführt wird, wobei die prozentualen Begrenzungen jeweils dem subjektiv empfundenen Helligkeitseindruck der bunten Druckfarben "Cyan", "Magenta" und "Gelb" in Bezug auf die Druckfarbe "Schwarz" entsprechen,
- Matrixelemente der Schwellwert-Matrizen der bunten Druckfarben "Cyan", "Magenta" und "Gelb" jeweils mit den Schwellwerten eines begrenzten Schwellwert-Bereiches belegt sind, der dem begrenzten Wertebereich der zugehörigen korrigierten Farbauszugswerte ($C_{KOR}$, $M_{KOR}$, $Y_{KOR}$) entspricht und
- die korrigierten Farbauszugswerte ($C_{KOR}$, $M_{KOR}$, $Y_{KOR}$) mit den Schwellwerten der Schwellwert-Matrizen verglichen werden, um die Steuerbits der Einzel-Bitmaps zu erhalten.

**12.** Verfahren nach einem der Ansprüche 1 bis 10, **dadurch gekennzeichnet,** daß

- die Korrektur der im Grau-Composite-Proof aufzuzeichnenden Grauwerte gegenüber den durch die Farbauszugswerte (C, M, Y) repräsentierten Grauwerten der bunten Druckfarben "Cyan", "Magenta" und "Gelb" jeweils durch eine unterschiedliche Anzahl von aus dem Schwellwert-Bereich ausgewählten relevanten Schwellwerten innerhalb der Schwellwert-Matrizen der bunten Druckfarben "Cyan", "Magenta" und "Gelb" durchgeführt wird, wobei jeweils die unterschiedlichen Anzahl von Schwellwerten nach dem subjektiv empfundenen Helligkeitseindruck der bunten Druckfarben "Cyan",
- "Magenta" und "Gelb" in Bezug auf die Druckfarbe "Schwarz" ermittelt wird und
- die unkorrigierten Farbauszugswerte (C, M, Y) mit den Schwellwerten der Schwellwert-Matrizen verglichen werden, um die Steuerbits der Einzel-Bitmaps zu erhalten.

**13.** Verfahren nach einem der Ansprüche 1 bis 10, **dadurch gekennzeichnet,** daß

- die Korrektur der im Grau-Composite-Proof aufzuzeichnenden Grauwerte gegenüber den durch die Farbauszugswerte (C, M, Y) repräsentierten Grauwerten der bunten Druckfarben "Cyan", "Magenta" und "Gelb" durch unterschiedliche prozentuale Begrenzungen der Wertebereiche der Farbauszugswerte (C, M, Y) der bunten Druckfarben "Cyan", "Magenta" und "Gelb" durchgeführt wird, wobei die prozentualen Begrenzungen jeweils dem subjektiv empfundenen Helligkeitseindruck der bunten Druckfarben "Cyan", "Magenta" und "Gelb" in Bezug auf die Druckfarbe "Schwarz" entsprechen,
- Matrixelemente in den Schwellwert-Matrizen der bunten Druckfarben "Cyan", "Magenta" und "Gelb" jeweils mit einer unterschiedlichen Anzahl von aus dem Schwellwert-Bereich augewählten relevanten Schwellwerten belegt werden, wobei die jeweilige unterschiedlichen Anzahl von Schwellwerten nach dem subjektiv empfundenen Helligkeitseindruck der bunten Druckfarben "Cyan", "Magenta" und "Gelb" in Bezug auf die Druckfarbe "Schwarz" ermittelt wird,
- die in den Schwellwert-Matrizen der bunten Druckfarben "Cyan", "Magenta" und "Gelb" nicht mit relevanten Schwellwerten belegte Matrixelemente mit außerhalb des Schwellwert-Bereiches liegenden Schwellwerten besetzt werden,
- in den Schwellwert-Matrizen in Abhängigkeit von den korrigierten Farbauszugswerten (C, M, Y, K) relevante Schwellwerte herausgesucht werden und
- die Einzel-Bitmaps der Druckfarben durch Umwandlung der herausgesuchten relevanten Schwellwerte in Steuerbits erzeugt werden.

**14.** Verfahren nach Anspruch 12 oder 13, **dadurch gekennzeichnet,** daß die relevanten Schwellwerte gleichabständig aus dem Schwellwert-Bereich ausgewählt werden.

**15.** Verfahren nach Anspruch 14, **dadurch gekennzeichnet,** daß in Abhängigkeit von dem jeweiligen Farbauszugswert C = M = Y = K = n jeweils die kleinsten n Schwellwerte aus den Schwellwert-Matrizen herausgesucht werden.

**16.** Verfahren nach einem der Ansprüche 1 bis 15, **dadurch gekennzeichnet,** daß die Matrixelemente in den Schwellwert-Matrizen derart mit Schwellwerten belegt werden, daß in den Rastermaschen des Rasters des Grau-Composite-Proofs verteilte Bildpunkte als Rasterpunkte gedruckt werden.

**17.** Verfahren nach einem der Ansprüche 1 bis 15, **dadurch gekennzeichnet,** daß die Matrixelemente in den Schwellwert-Matrizen derart mit Schwellwerten belegt werden, daß in den Rastermaschen des Rasters des Grau-Composite-Proofs aus gedruckten Bildpunkten zusammengesetzte kompakte Rasterpunkte entstehen.

**18.** Verfahren nach einem der Ansprüche 1 bis 17, **dadurch gekennzeichnet,** daß die Schwellwerte in der Schwellwert-Matrix der Druckfarbe "Schwarz" derart gewählt sind, daß in den Rastermaschen des Rasters des Grau-Composite-Proofs mindestens einige gedruckte Bildpunkte der Druckfarbe "Schwarz" über den gedruckten Bildpunkten der bunten Druckfarben "Cyan", "Magenta" und "Gelb" liegen.

**19.** Verfahren nach Anspruch 18, **dadurch gekennzeichnet,** daß für einen Farbauszugswert (K) der Druckfarbe "Schwarz" von 50% die Schwellwerte in der Schwellwert-Matrix der Druckfarbe "Schwarz" derart gewählt sind, daß in den Rastermaschen des Rasters des Grau-Composite-Proofs ungefähr die Hälfte der gedruckten Bildpunkte der Druckfarbe "Schwarz" über den gedruckten Bildpunkten der bunten Druckfarben "Cyan", "Magenta" und "Gelb" liegen und die restlichen gedruckten Bildpunkte der Druckfarbe "Schwarz" auf Positionen in den Rastermaschen liegen, die nicht von gedruckten Bildpunkten der bunten Druckfarben "Cyan", "Magenta" und "Gelb" besetzt sind.

**20.** Verfahren nach einem der Ansprüche 1 bis 19, **dadurch gekennzeichnet,** daß beim Druck des Grau-Composite-Proofs zusätzlich Schmuckfarben, die sich im Farbdruck nicht durch die bunten Druckfarben "Cyan", "Magenta" und "Gelb" wiedergeben lassen, berücksichtigt werden.

**21.** Verfahren nach Anspruch 20, **dadurch gekennzeichnet,** daß

- die Farbauszugswerte (S) einer Schmuckfarbe in korrigierte Farbauszugswerte (S*) umgewandelt werden,
- aus den korrigierten Farbauszugswerten (S*) nach einer Raster-Funktion die Steuerbits einer weiteren Einzel-Bitmap erzeugt werden und
- die Steuerbits der Einzel-Bitmap der Schmuckfarbe mit den Steuerbits der Einzel-Bitmaps der anderen Druckfarben "Cyan", "Magenta", "Gelb" und "Schwarz" zu der Gesamt-Bitmap vereinigt werden.

**22.** Verfahren nach Anspruch 20 oder 21, **dadurch gekennzeichnet,** daß die Raster-Funktion der Schmuckfarbe der Raster-Funktion der Druckfarbe "Schwarz" entspricht.

**23.** Verfahren nach einem der Ansprüche 20 bis 22, **dadurch gekennzeichnet,** daß zur Korrektur der Farbauszugswerte (S) der Sonderfarbe

- für die Farbauszugswerte (S) diejenigen Farbauszugswerte ($C_S$, $M_S$, $Y_S$, $K_S$) der Druckfarben "Cyan", "Magenta", "Gelb" und "Schwarz" ermittelt werden, welche die Schmuckfarbe näherungsweise wiedergeben,
- die Farbauszugswerte ($C_S$, $M_S$, $Y_S$) der bunten Druckfarben "Cyan", "Magenta" und "Gelb" entsprechend den Korrekturfaktoren ($L_C$, $L_M$, $L_Y$) reduziert werden,
- durch Addition der reduzierten Farbauszugswerte ($C_S$, $M_S$, $Y_S$) äquivalente Grauwerte ($G_S$) gebildet werden und
- aus den äquivalenten Grauwerten ($G_S$) und den Farbauszugswerten ($K_S$) der Druckfarbe "Schwarz" nach der Gleichung $S* = (G_S + K_S) + (K_S \times G_S)$ die korrigierten Farbauszugswerte (S*) der Schmuckfarbe ermittelt werden.

**24.** Einrichtung zur Erzeugung eines gerasterten Grau-Composite-Proofs zur Vorabkontrolle des Farbdrucks eines Farbbildes, **gekennzeichnet durch**

- Korrektur-Stufen (1, 2, 3) zur Korrektur der auf dem Grau-Composite-Proof aufzuzeichnenden Grauwerte gegenüber den durch die Farbauszugswerte (C, M, Y) repräsentierten Grauwerten der bunten Druckfarben "Cyan", "Magenta" und "Gelb" für den Farbdruck auf unterschiedliche prozentuale Anteile, die jeweils dem subjektiv empfundenen Helligkeitseindruck der bunten Druckfarben "Cyan", "Magenta" und "Gelb" in Bezug auf die Druckfarbe "Schwarz" entsprechen,
- Raster-Generatoren (4, 5, 6, 14), welche die Farbauszugswerte (C, M, Y, K) der Druckfarben "Cyan", "Magenta", "Gelb" und "Schwarz" durch unterschiedliche Raster-Funktionen derart in drei Einzel-Bitmaps umwandeln, daß die aufgezeichneten Bildpunkte der bunten Druckfarben "Cyan", "Magenta" und "Gelb" auf dem Aufzeichnungsmaterial nebeneinander liegen,
- an die Raster-Generatoren (4, 5, 6, 14) angeschlossene Bitmap-Speicher (7, 8, 9, 15) zur Ablage der Einzel-Bitmaps,
- eine Verknüpfungs-Stufe (17) zur Vereinigung der Einzel-Bitmaps zu einer Gesamt-Bitmap und
- ein der Verknüpfungs-Stufe (17) nachgeschaltetes Schwarz/Weiß-Aufzeichnungsgerät (18), das durch die Steuerbits der Gesamt-Bitmap zur Aufzeichnung des Grau-Composite-Proofs angesteuert wird, in dem die Farbwerte der bunten Druckfarben "Cyan", "Magenta" und "Gelb" zu helligkeitsäquivalenten Grauwerten vereinigt sind.

**25.** Einrichtung nach Anspruch 24, **dadurch gekennzeichnet,** daß die Raster-Generatoren (4, 5, 6, 14) aus Schwellwert-Speichern (19) und Komparatoren (20) bestehen.

**26.** Einrichtung nach Anspruch 24 oder 25, **dadurch gekennzeichnet,** daß die Raster-Generatoren (4, 5, 6, 14) aus Schwellwert-Speichern (19) und Auswerte-Stufen (28) bestehen.

**27.** Einrichtung nach einem der Ansprüche 24 bis 26, **dadurch gekennzeichnet,** daß die Einrichtung zur Berücksichtigung von Schmuckfarben im Grau-Composite-Proof zusätzlich eine Rechen-Stufe (30) zur Korrektur der Farbauszugswerte (S) der Schmuckfarbe, einen nachgeschalteten Raster-Generator (31) zur Erzeugung der Einzel-Bitmap der Schmuckfarbe und einen Bitmap-Speicher (32) zur Ablage der Einzel-Bitmap der Schmuckfarbe aufweist, welcher an die Verknüpfungs-Stufe (17) angeschlossen ist.

**Claims**

**1.** A method for the production of a screened grey composite proof for advance monitoring of the colour printing of a colour image, in which

- the colour separation values (C,M,Y,K) of the colour separations "cyan", "magenta", "yellow" and "black" of the colour image are produced,
  a recording material is divided into image points,
- the colour separation values (C,M,Y,K) are converted according to a screen function into control bits, associated with the image points, in the form of a bit map and
- the proof is recorded by image point and by line on the recording material, the control bits of the bit map determining with the recording whether the image points are recorded or not as screen points or parts of a screen point,

**characterised in that**

- the grey values to be recorded on the grey composite proof are corrected with respect to the grey values, represented by the colour separation values (C, M, Y), of the coloured printing colours "cyan", "magenta" and "yellow" for colour printing to different percentual proportions which respectively correspond to the subjectively perceived brightness impression of the coloured printing colours "cyan", "magenta" and "yellow" with respect to the printing colour "black",
- the colour separation values (C,M,Y) of the coloured printing colours cyan "magenta" and "yellow" are converted by different screen functions into three individual bit maps such that the recorded image points of the coloured printing colours "cyan", "magenta" and "yellow" lie adjacent to each other on the recording material,
- the individual bit maps of the coloured printing colours "cyan", "magenta" and "yellow" are combined to an overall bit map and
- the control bits of the overall bit map modulate a black/white recording apparatus for the recording of the grey composite proof, in which the colour values of the coloured printing colours "cyan", "magenta" and "yellow" are combined to brightness-equivalent grey values.

**2.** The method according to Claim 1, **characterised in that**

- the colour separation values (K) of the colour separation "black" are converted according to a screen function into a further individual bit map and
- the individual bit map of the printing colour "black" with the individual bit maps of the coloured printing colours "cyan", "magenta" and "yellow" are combined to the overall bit map.

**3.** The method according to Claim 1 or 2, **characterised in that** the combining of the individual bit maps to the overall bit map takes place through a logical OR link of the control bits.

**4.** The method according to one of Claims 1 to 3, **characterised in that** the control bits of the individual bit maps of the printing colours are respectively produced by comparison of the colour separation values (C,M,Y,K) of the respective printing colours with the threshold values of a threshold value matrix representing the screen function.

**5.** The method according to one of Claims 1 to 3, **characterised in that** the individual bit maps of the printing colours are respectively produced by a selection, dependent on the colour separation values (C,M,Y,K) of the respective printing colours, of threshold values representing the screen function of a threshold value matrix and by conversion of the selected threshold values into the control bits.

**6.** The method according to one of Claims 1 to 5, **characterised in that** - the threshold value matrices are divided into matrix elements which are able to be occupied with threshold values and

- matrix elements, which are occupied with threshold values in one of the three threshold value matrices of the coloured printing colours "cyan", "magenta" and "yellow", are not occupied with threshold values in the other two threshold value matrices.

7. The method according to one of Claims 1 to 6, **characterised in that -** the correction of the grey values to be recorded in the grey composite proof with respect to the grey values of the coloured printing colours "cyan", "magenta" and "yellow" represented by the colour separation values (C,M,Y), is carried out by different percentual limits of the value ranges of the colour separation values (C,M,Y) of the coloured printing colours "cyan", "magenta" and "yellow", in which the percentual limits correspond respectively to the subjectively perceived brightness impression of the coloured printing colours "cyan", "magenta" and "yellow" in relation to the printing colour "black", and the corrected colour separation values ($C_{KOR}$, $M_{KOR}$, $Y_{KOR}$) are converted via the screen functions into the individual bit maps of the coloured printing colours "cyan", "magenta" and "yellow".

8. The method according to one of Claims 1 to 6, **characterised in that -** the correction of the grey values to be recorded in the grey composite proof with respect to the grey values of the coloured printing colours "cyan", "magenta" and "yellow" represented by the colour separation values (C,M,Y) is carried out respectively by a different number of threshold values within the threshold value matrices of the coloured printing colours "cyan", "magenta" and "yellow", in which the respective different number of threshold values is determined according to the subjectively perceived brightness impression of the coloured printing colours "cyan", "magenta" and "yellow" in relation to the printing colour "black" and

   - the uncorrected colour separation values (C,M,Y) are converted via the screen functions into the individual bit maps of the coloured printing colours "cyan", "magenta" and "yellow".

9. The method according to one of Claims 1 to 8, **characterised in that**

   - the different limit of the ranges of values of the colour separation values (C,M,Y) of the coloured printing colours "cyan", "magenta" and "yellow" is carried out by multiplication of the colour separation values (C,M,Y) with correction factors ($L_C$, $L_M$, $L_Y$), which correspond to the subjectively perceived brightness impression of the coloured printing colours "cyan", "magenta" and "yellow" in relation to the printing colour "black".

10. The method according to one of Claims 1 to 9, **characterised in that**

   - the luminance values of screened full tone areas of the printing colours "cyan", "magenta", "yellow" and "black" are measured and
   - the correction factors ($L_C$, $L_M$, $L_Y$) correspond to the measured luminance values of the screened full tone areas of the printing colours "cyan", "magenta", "yellow" in relation to the luminance value (100%) of the screened full tone area of the printing colour "black".

11. The method according to one of Claims 1 to 10, **characterised in that**

   - the correction of the grey values to be recorded in the grey composite proof with respect to the grey values of the coloured printing colours "cyan", "magenta" and "yellow" represented by the colour separation values (C,M,Y) is carried out by different percentual limits of the ranges of values of the colour separation values (C,M,Y) of the coloured printing colours "cyan", "magenta" and "yellow", in which the percentual limits correspond respectively to the subjectively perceived brightness impression of the coloured printing colours "cyan", "magenta" and "yellow" in relation to the printing colour "black",
   - matrix elements of the threshold value matrices of the coloured printing colours "cyan", "magenta" and "yellow" are occupied respectively with the threshold values of a limited threshold value range, which corresponds to the limited range of values of the associated corrected colour separation values ($C_{KOR}$, $M_{KOR}$, $Y_{KOR}$) and
   - the corrected colour separation values ($C_{KOR}$, $M_{KOR}$, $Y_{KOR}$) are compared with the threshold values of the threshold value matrices, in order to obtain the control bits of the individual bit maps.

12. The method according to one of Claims 1 to 10, **characterised in that**

   - the correction of the grey values to be recorded in the grey composite proof with respect to the grey values of the coloured printing colours "cyan", "magenta" and "yellow" represented by the colour separation values (C,M,Y) is respectively carried out by a different number of relevant threshold values selected from the threshold value range within the threshold value matrices of the coloured printing colours "cyan", "magenta" and "yellow", in which respectively the different number of threshold values is determined according to the subjectively perceived brightness impression of the coloured printing colours "cyan", "magenta" and "yellow" in relation to the printing colour "black" and

- the uncorrected colour separation values (C,M,Y) are compared with the threshold values of the threshold value matrices, in order to obtain the control bits of the individual bit maps.

13. The method according to one of Claims 1 to 10, **characterised in that**

- the correction of the grey values to be recorded in the grey composite proof with respect to the grey values of the coloured printing colours "cyan", "magenta" and "yellow" represented by the colour separation values (C, M,Y) is carried out by different percentual limits of the ranges of values of the colour separation values (C,M, Y) of the coloured printing colours "cyan", "magenta" and "yellow", in which the percentual limits respectively correspond to the subjectively perceived brightness impression of the coloured printing colours "cyan", "magenta" and "yellow" in relation to the printing colour "black",
- matrix elements in the threshold value matrices of the coloured printing colours "cyan", "magenta" and "yellow" are respectively occupied with a different number of relevant threshold values selected from the threshold value range, in which the respective different number of threshold values is determined according to the subjectively perceived brightness impression of the coloured printing colours "cyan", "magenta" and "yellow" in relation to the printing colour "black",
- the matrix elements not occupied with relevant threshold values in the threshold value matrices of the coloured printing colours "cyan", "magenta" and "yellow" are occupied with threshold values lying outside the threshold value range,
- in the threshold value matrices, relevant threshold values are singled out as a function of the corrected colour separation values (C,M,Y,K) and
- the individual bit maps of the printing colours are produced by conversion of the singled out relevant threshold values into control bits.

14. The method according to Claim 12 or 13, **characterised in that** the relevant threshold values are selected from the threshold value range with equal intervals.

15. The method according to Claim 14, **characterised in that** as a function of the respective colour separation value C=M=Y=K=n respectively the smallest n threshold values are singled out from the threshold value matrices.

16. The method according to one of Claims 1 to 15, **characterised in that** the matrix elements in the threshold value matrices are occupied with threshold values such that image points distributed in the screen meshes of the screen of the grey composite proof are printed as screen points.

17. The method according to one of Claims 1 to 15, **characterised in that** the matrix elements in the threshold value matrices are occupied with threshold values such that in the screen meshes of the screen of the grey composite proof, compact screen points composed of printed image points are produced.

18. The method according to one of Claims 1 to 17, **characterised in that** the threshold values in the threshold value matrix of the printing colour "black" are selected such that in the screen meshes of the screen of the grey composite proof at least some printed image points of the printing colour "black" lie over the printed image points of the coloured printing colours "cyan", "magenta" and "yellow".

19. The method according to Claim 18, **characterised in that** for a colour separation value (K) of the printing colour "black" of 50%, the threshold values in the threshold value matrix of the printing colour "black" are selected such that in the screen meshes of the screen of the grey composite proof approximately half of the printed image points of the printing colour "black" lie over the printed image points of the coloured printing colours "cyan", "magenta" and "yellow" and the remaining printed image points of the printing colour "black" lie on positions in the screen meshes which are not occupied by printed image points of the coloured printing colours "cyan", "magenta" and "yellow".

20. The method according to one of Claims 1 to 19, **characterised in that** with the printing of the grey composite proof in addition decorative colours which can not be reproduced in colour printing by the coloured printing colours "cyan", "magenta" and "yellow", are taken into account.

21. The method according to Claim 20, **characterised in that**

   - the colour separation values (S) of a decorative colour are converted into corrected colour separation values (S*),
   - from the corrected colour separation values (S*) according to a screen function the control bits of a further individual bit map are produced and
   - the control bits of the individual bit map of the printing colour are combined with the control bits of the individual bit map of the other printing colours "cyan", "magenta", "yellow" and "black" to the overall bit map.

22. The method according to Claim 20 or 21, **characterised in that** the screen function of the decorative colour corresponds to the screen function of the printing colour "black".

23. The method according to one of Claims 20 to 22, **characterised in that** for the correction of the colour separation values (S) of the special colour

   - for the colour separation values (S), those colour separation values (CS, $M_S$, $Y_S$, $K_S$) of the printing colours "cyan", "magenta", "yellow" and "black" are determined, which approximately reproduce the decorative colour,
   - the colour separation values ($C_S$, $M_S$, $Y_S$) of the coloured printing colours "cyan", "magenta" and "yellow" are reduced according to the correction factors ($L_S$, $L_M$, $L_y$),
   - through addition of the reduced colour separation values ($C_S$, $M_S$, $Y_S$) equivalent grey values (GS) are formed and
   - from the equivalent grey values (GS) and the colour separation values ($K_S$) of the printing colour "black" according to the equation $S^* = (G_S + K_S) + (K_S \times G_S)$ the corrected colour separation values (S*) of the decorative colour are determined.

24. A device for the production of a screened grey composite proof for the advance monitoring of the colour printing of a colour image, **characterised by** correction stages (1,2, 3) for the correction of the grey values to be recorded on the grey composite proof with respect to the grey values of the coloured printing colours "cyan", "magenta" and "yellow", represented by the colour separation values (C,M,Y), for colour printing to different percentual proportions, which respectively correspond to the subjectively perceived brightness impression of the coloured printing colours "cyan", "magenta" and "yellow" in relation to the printing colour "black",

   - screen generators (4, 5, 6, 14), which convert the colour separation values (C, M, Y, K) of the printing colours "cyan", "magenta", "yellow" and "black" through different screen functions into three individual bit maps such that the recorded image points of the coloured printing colours "cyan", "magenta" and "yellow" lie adjacent to each other on the recording material,
   - bit map memories (7, 8, 9, 15) connected to the screen generators (4, 5, 6, 14) for deposit of the individual bit maps,
   - a linking stage (17) for combining the individual bit maps to an overall bit map and
   - a black/white recording apparatus (18) arranged after the linking stage (17), which apparatus (18) is controlled by the control bits of the overall bit map for recording to the grey composite proof, in which the colour values of the coloured printing colours "cyan", "magenta" and "yellow" are combined to brightness equivalent grey values.

25. The device according to Claim 24, **characterised in that** the screen generators 4, 5, 6, 14) consist of threshold value memories (19) and comparators (20).

26. The device according to Claim 24 or 25, **characterised in that** the screen generators (4, 5, 6, 14) consist of threshold value memories (19) and evaluation stages (28).

27. The device according to one of Claims 24 to 26, **characterised in that** the device for taking into account decorative colours in the grey composite proof additionally has a calculation stage (30) for correction of the colour separation values (S) of the decorative colour, a screen generator (31) arranged thereafter for production of the individual bit map of the decorative colour and a bit map memory (32) for deposit of the individual bit map of the decorative colour, which is connected to the linking stage (17).

**Revendications**

1. Procédé pour réaliser une épreuve composite de gris, tramée, pour un contrôle préalable de l'impression de couleur d'une image en couleurs selon lequel :

   - on forme les valeurs (C, M, Y, K) des composantes de couleur « Cyan », « Magenta », « Jaune » et « Noir » de l'image en couleurs,
   - on subdivise un support d'impression en points image,
   - on convertit les valeurs des composantes de couleur (C, M, Y, K) suivant une fonction de trame en bits de commande associée aux points image, sous la forme d'une carte de point bitmap,
   - on inscrit l'épreuve point par point et ligne par ligne sur le support d'impression, les bits de commande de la carte bitmap définissant à l'inscription, si les points image sont tracés comme point de trame ou partie d'un point de trame ou ne sont pas tracés,

   caractérisé en ce qu'

   - on corrige les valeurs de gris à inscrire sur l'épreuve composite de gris par rapport aux valeurs de gris représentées par les composantes de couleur (C, M, Y) des couleurs d'impression saturées « Cyan », « Magenta », « Jaune » pour l'impression en couleurs selon différents pourcentages partiels qui correspondent chaque fois à la sensation de luminosité perçue de manière subjective des couleurs d'impression saturées « Cyan », « Magenta » et « Jaune » par rapport à la couleur d'impression « Noir »,
   - on convertit les composantes de couleur (C, M, Y) des couleurs d'impression saturées « Cyan », « Magenta » et « Jaune » par des fonctions de trame différentes en trois cartes bitmap distinctes pour que les points image enregistrés des couleurs d'impression saturées « Cyan », « Magenta » et « Jaune » soient juxtaposés sur le support d'impression,
   - on réunit les différentes cartes bitmap des couleurs d'impression saturées « Cyan », « Magenta » et « Jaune » en une carte bitmap globale et,
   - les bits de commande de la carte bitmap globale, commandent un appareil d'enregistrement noir/blanc pour réaliser l'épreuve composite de gris en combinant les teintes des couleurs d'impression saturées « Cyan », « Magenta » et « Jaune » en des valeurs de gris de luminosité équivalente.

2. Procédé selon la revendication 1,
   caractérisé en ce qu'

   - on convertit les composantes de couleur (K) de la composante de couleur « Noir » selon une fonction de trame en une autre carte bitmap, distincte et,
   - on combine la carte bitmap distincte de la couleur d'impression « Noir » aux cartes bitmaps distinctes des couleurs d'impression saturées « Cyan », « Magenta » et « Jaune » pour obtenir une carte bitmap globale.

3. Procédé selon la revendication 1 ou 2,
   caractérisé en ce que
   la combinaison des différentes cartes bitmaps séparées en une carte bitmap globale, se fait par une combinaison logique OU des bits de commande.

4. Procédé selon l'une des revendications 1 à 3,
   caractérisé en ce qu'
   on génère les bits de commande des cartes bitmaps distinctes des couleurs d'impression chaque fois par comparaison des composantes de couleur (C, M, Y, K) des couleurs d'impression correspondantes à des valeurs de seuil représentant la fonction de trame d'une matrice de valeurs de seuil.

5. Procédé selon l'une des revendications 1 à 3,
   caractérisé en ce qu'
   on forme les différentes cartes bitmaps des couleurs d'impression chaque fois par une sélection des valeurs de seuil représentant la fonction de trame dans une matrice de valeurs de seuil à partir des composantes de couleur (C, M, Y, K) des couleurs d'impression concernées, et par conversion des valeurs de seuil sélectionnées en bits de commande.

6. Procédé selon l'une des revendications 1 à 5,

caractérisé en ce qu'
on subdivise les matrices de valeurs de seuil en éléments de matrice qui sont occupés par des valeurs de seuil et,

- les éléments de matrice qui sont occupés dans l'une des trois matrices de valeurs de seuil des couleurs d'impression saturées « Cyan », « Magenta » et « Jaune » avec les valeurs de seuil, ne sont pas occupés par des valeurs de seuil dans les deux autres matrices de valeurs de seuil.

7. Procédé selon l'une des revendications 1 à 6,
caractérisé en ce qu'

- on corrige les valeurs de gris à inscrire sur l'épreuve composite des gris, par rapport aux valeurs de gris représentées par les composantes de couleur (C, M, Y) des couleurs d'impression saturées « Cyan », « Magenta » et « Jaune », selon différentes limites en pourcentage des plages de valeur des composantes (C, M, Y) des couleurs d'impression saturées « Cyan », « Magenta » et « Jaune », et les limites en pourcentage correspondent à l'impression de luminosité perçue de manière subjective des couleurs d'impression saturées « Cyan », « Magenta » et « Jaune », par rapport à la couleur d'impression « Noir » et,
- on convertit les composantes corrigées ($C_{COR}$, $M_{COR}$, $Y_{COR}$), par les fonctions de trame dans les différentes cartes bitmaps séparées des couleurs d'impression saturées « Cyan », « Magenta » et « Jaune ».

8. Procédé selon l'une des revendications 1 à 6,
caractérisé en ce qu'

- on effectue la correction des valeurs de gris à inscrire sur l'épreuve composite des gris par rapport aux valeurs de gris représentées par les composantes de couleur (C, M, Y) des couleurs d'impression saturées « Cyan », « Magenta » et « Jaune » chaque fois par un nombre différent de valeurs de seuil à l'intérieur des matrices à valeurs de seuil des couleurs d'impression saturées « Cyan », « Magenta » et « Jaune », le nombre différent respectif de valeurs de seuil étant obtenu après l'impression de luminosité perçue de manière subjective des couleurs d'impression saturées « Cyan », « Magenta » et « Jaune » par rapport à la couleur d'impression « Noir » et,
- on convertit les composantes de couleur non corrigées (C, M, Y) par les fonctions de trame en cartes bitmaps distinctes des couleurs d'impression saturées « Cyan », « Magenta » et « Jaune ».

9. Procédé selon l'une des revendications 1 à 8,
caractérisé en ce qu'

- on effectue les différentes limitations des plages de valeur des composantes de couleur (C, M, Y) des couleurs d'impression saturées « Cyan », « Magenta » et « Jaune » par multiplication des composantes (C, M, Y) avec des coefficients de correction ($L_C$, $L_M$, $L_Y$) qui correspondent à l'impression de luminosité perçue de manière subjective des couleurs d'impression saturées « Cyan », « Magenta » et « Jaune » par rapport à la couleur d'impression « Noir ».

10. Procédé selon l'une des revendications 1 à 9,
caractérisé en ce qu'

- on mesure les valeurs de luminance des surfaces de teinte pleines, tramées pour les couleurs d'impression « Cyan », « Magenta », « Jaune » et « Noir » et,
- les coefficients de correction ($L_C$, $L_M$, $L_Y$) des valeurs de luminance mesurées correspondent aux surfaces de teinte pleines tramées des couleurs d'impression « Cyan », « Magenta » et « Jaune » rapportées à la valeur de luminance (100 %) de la surface de teinte pleine tramée de la couleur d'impression « Noir ».

11. Procédé selon l'une des revendications 1 à 10,
caractérisé en ce qu'

- on effectue la correction des valeurs de gris inscrites sur l'épreuve composite des gris par rapport aux valeurs de gris représentées par les composantes de couleur (C, M, Y) des couleurs d'impression saturées « Cyan », « Magenta » et « Jaune » par des limitations en pourcentage différentes des plages de valeur des composantes de couleur (C, M, Y) des couleurs d'impression saturées « Cyan », « Magenta » et « Jaune », les limitations en pourcentage correspondant chaque fois à l'impression de luminosité perçue de manière subjective des couleurs d'impression saturées « Cyan », « Magenta » et « Jaune » par rapport à la couleur d'impression « Noir »,

- les éléments des matrices à valeurs de seuil des couleurs d'impression saturées « Cyan », « Magenta » et « Jaune » sont chaque fois occupés par les valeurs de seuil d'une plage de valeurs de seuil limitées, qui correspond à la plage de valeurs limitées des composantes de couleur, corrigées, correspondantes ($C_{COR}$, $M_{COR}$, $Y_{COR}$) et,

- on compare les composantes de couleur corrigées ($C_{COR}$, $M_{COR}$, $Y_{COR}$) aux seuils des matrices à valeurs de seuil pour obtenir les bits de commande des différentes cartes bitmaps.

12. Procédé selon l'une des revendications 1 à 10,
caractérisé en ce qu'

- on effectue la correction des valeurs de gris à enregistrer sur l'épreuve composite des gris par rapport aux valeurs de gris représentant les composantes de couleur (C, M, Y) des couleurs d'impression saturées « Cyan », « Magenta » et « Jaune » chaque fois par un nombre différent de valeurs de seuil significatives choisies dans la plage des valeurs de seuil à l'intérieur des matrices à valeurs de seuil des couleurs d'impression saturées « Cyan », « Magenta » et « Jaune », et on détermine chaque fois les nombres différents de valeurs de seuil selon l'impression de luminosité perçue de manière subjective des couleurs d'impression saturées « Cyan », « Magenta » et « Jaune » par rapport à la couleur d'impression « Noir » et,

- on compare les composantes de couleur non corrigées (C, M, Y) aux valeurs de seuil des matrices à valeurs de seuil pour obtenir les bits de commande des différentes cartes bitmaps.

13. Procédé selon l'une des revendications 1 à 10,
caractérisé en ce qu'

- on effectue la correction des valeurs de gris à inscrire sur l'épreuve composite des gris par rapport aux valeurs de gris représentées par les composantes de couleur (C, M, Y) correspondant aux couleurs d'impression saturées « Cyan », « Magenta » et « Jaune » par différentes limites en pourcentage, des plages de valeur des composantes de couleur (C, M, Y) des couleurs d'impression saturées « Cyan », « Magenta » et « Jaune », les limitations en pourcentage correspondant chaque fois à l'impression de luminosité perçue de manière subjective des couleurs d'impression saturées « Cyan », « Magenta » et « Jaune » par rapport à la couleur d'impression « Noir »,

- on occupe les éléments de matrice dans les matrices à valeurs de seuil des couleurs d'impression saturées « Cyan », « Magenta » et « Jaune » chaque fois avec un nombre différent de valeurs de seuil significatives sélectionnées dans la plage des valeurs de seuil, le nombre différent respectif des valeurs de seuil étant obtenu selon l'impression de luminosité perçue de manière subjective des couleurs d'impression saturées « Cyan », « Magenta » et « Jaune » par rapport à la couleur d'impression « Noir »,

- on installe dans les éléments de matrice dans les matrices à valeurs de seuil des couleurs d'impression saturées « Cyan », « Magenta » et « Jaune » non occupés par des valeurs de seuil significatives avec des valeurs de seuil situées en dehors de la plage des valeurs de seuil,

- dans les matrices à valeurs de seuil on sélectionne les valeurs de seuil significatives en fonction des valeurs d'extrait de couleur corrigées (C, M, Y, K) et,

- on forme les cartes bitmaps, distinctes des couleurs d'impression par conversion des valeurs de seuil significatives, sélectionnées en bits de commande.

14. Procédé selon les revendications 12 ou 13,
caractérisé en ce qu'
on sélectionne les valeurs de seuil significatives de façon équidistante dans la plage des valeurs de seuil.

15. Procédé selon la revendication 14,
caractérisé en ce qu'
en fonction de la composante de couleur respective C = M = Y = K = n, on choisit chaque fois la plus petite valeur de seuil (n) dans les matrices à valeurs de seuil.

16. Procédé selon l'une des revendications 1 à 15,
caractérisé en ce qu'
on occupe les éléments de matrice dans les matrices à valeurs de seuil avec des valeurs de seuil telles que dans les mailles de la trame de l'épreuve composite des gris, on imprime des points image répartis comme des points de trame.

**17.** Procédé selon l'une des revendications 1 à 15,
caractérisé en ce qu'
on occupe les éléments de matrice des matrices à valeurs de seuil avec des valeurs de seuil telles que dans les mailles de la trame de l'épreuve composite des gris, on obtient des points de trame, compacts, composés de points image imprimés.

**18.** Procédé selon l'une des revendications 1 à 17,
caractérisé en ce qu'
on sélectionne des valeurs de seuil dans la matrice des valeurs de seuil de la couleur d'impression « Noir » pour que dans les mailles de la trame de l'épreuve composite des gris, au moins quelques points image imprimés de la couleur d'impression « Noir » recouvrent les points image imprimés des couleurs d'impression saturées « Cyan », « Magenta » et « Jaune ».

**19.** Procédé selon la revendication 18,
caractérisé en ce que
pour une valeur d'extrait de couleur (K) de la couleur d'impression « Noir » de 50 %, on sélectionne les valeurs de seuil dans la matrice à valeurs de seuil de la couleur d'impression « Noir » pour que dans les mailles de la trame de l'épreuve composite des gris, environ la moitié des points image imprimés de la couleur d'impression « Noir » se trouve sur les points image imprimés des couleurs d'impression saturées « Cyan », « Magenta » et « Jaune » et que les autres points image imprimés de la couleur d'impression « Noir » se trouvent dans les positions des mailles de trame qui ne sont pas occupées par les points image imprimés des couleurs d'impression saturées « Cyan », « Magenta » et « Jaune ».

**20.** Procédé selon l'une des revendications 1 à 19,
caractérisé en ce qu'
à l'impression de l'épreuve composite des gris, on tient en outre compte de couleurs décoratives supplémentaires qui ne peuvent être reproduites dans l'impression en couleurs par les couleurs d'impression saturées « Cyan », « Magenta » et « Jaune ».

**21.** Procédé selon la revendication 20,
caractérisé en ce qu'

- on convertit les composantes de couleur (S) d'une teinte décorative en composantes de couleur corrigées (S*),
- à partir des composantes de couleur corrigées (S*), on forme selon une fonction de trame, les bits de commande d'une autre carte bitmap distincte et,
- on réunit les bits de commande de la carte bitmap distincte correspondant à la couleur décorative aux bits de commande des différentes cartes bitmaps des autres couleurs d'impression « Cyan », « Magenta », « Jaune », et « Noir » pour former une carte bitmap globale.

**22.** Procédé selon la revendication 20 ou 21,
caractérisé en ce que
la fonction de trame de la couleur décorative correspond à la fonction de trame de la couleur d'impression « Noir ».

**23.** Procédé selon l'une des revendications 20 à 22,
caractérisé en ce que
pour corriger la composante de couleur (S) de la couleur particulière,

- on détermine pour la composante de couleur (S), les composantes de couleur (Cs, Ms, Ys, Ks) des couleurs d'impression « Cyan », « Magenta », « Jaune » et « Noir » qui représentent la couleur décorative par approximation,
- on réduit les composantes de couleur (Cs, Ms, Ys) des couleurs d'impression saturées « Cyan », « Magenta » et « Jaune » en fonction des coefficients de correction ($L_C$, $L_M$, $L_Y$),
- on forme des valeurs de gris équivalentes ($G_S$) par addition des composantes de couleur réduites ($C_S$, $M_S$, $Y_S$), et
- à partir des valeurs de gris équivalentes ($G_S$) et des composantes de couleur ($K_S$) de la couleur d'impression « Noir », on forme selon l'équation $S^* = (G_S + K_S) + (K_S \times G_S)$, les composantes de couleur corrigées (S*) de la couleur décorative.

**24.** Installation pour réaliser une épreuve composite des gris, tramée, pour un contrôle préalable de l'impression de couleur d'une image en couleur,
caractérisée en ce que

- les échelons de correction (1, 2, 3) pour corriger les valeurs de gris à inscrire sur l'épreuve composite des gris par rapport aux valeurs de gris représentant les composantes de couleur (C, M, Y) des couleurs d'impression saturées « Cyan », « Magenta » et « Jaune » pour l'impression en couleurs pour différents composants en pourcentage, correspondent chaque fois à l'impression de luminosité perçue de manière subjective des couleurs d'impression saturées « Cyan », « Magenta » et « Jaune » par rapport à la couleur d'impression « Noir »,
- des générateurs de trame (4, 5, 6, 14) convertissent des composantes de couleur (C, M, Y, K) des couleurs d'impression « Cyan », « Magenta », « Jaune » et « Noir » par des fonctions de trame différentes en trois cartes bitmaps distinctes, de façon que les points image inscrits des couleurs d'impression saturées « Cyan », « Magenta » et « Jaune » soient juxtaposés sur le support d'impression,
- des mémoires bitmap (7, 8, 9, 15) sont reliées aux générateurs de trame (4, 5, 6, 14) pour enregistrer les différentes cartes bitmaps,
- un étage de combinaison (17) réunit les cartes bitmaps distinctes en une carte bitmap globale et,
- un appareil d'enregistrement noir/blanc (18) en aval de l'étage de combinaison (17) est commandé par les bits de commande de la carte bitmap globale pour enregistrer l'épreuve composite des gris, et combine les composantes des couleurs d'impression saturées « Cyan », « Magenta » et « Jaune » en des valeurs de gris de luminosité équivalente.

**25.** Installation selon la revendication 24,
caractérisée en ce que
les générateurs de trame (4, 5, 6, 14) se composent de mémoires à valeurs de seuil (19) et de comparateurs (20).

**26.** Installation selon la revendication 24 ou 25,
caractérisée en ce que
les générateurs de trame (4, 5, 6, 14) sont formés de mémoires à valeurs de seuil (19) et d'étages d'exploitation (28).

**27.** Installation selon l'une des revendications 24 à 26,
caractérisée en ce que
l'installation de renvoi des couleurs décoratives dans l'épreuve composite des gris comprend un étage de calcul (30) pour corriger les composantes de couleur (S) de la couleur décorative, un générateur de trame (31) pour générer la carte bitmap distincte de la couleur décorative et une mémoire bitmap (32) pour l'enregistrer, raccordée à l'étage de combinaison (17).

Fig. 1

Fig. 2a

Fig. 2b

Fig. 3a

Fig. 3b

Fig. 4a

Fig. 4b

25   26

Fig. 5

Fig. 6

EP 0 759 248 B1

21    22       23    24

|  |  |  | 37 |  |  |  | 56 |
|---|---|---|---|---|---|---|---|
|  | 62 |  |  |  |  |  |  |
| 21 |  |  | 30 |  |  | 50 |  |
| 43 |  | 24 |  |  | 8 |  | 18 |
|  |  |  | 53 |  | 40 |  |  |
| 14 |  |  | 5 |  |  |  | 27 |
|  |  | 59 |  | 11 |  |  |  |
|  | 34 |  |  |  | 46 |  | 2 |

**Fig. 7a**            **Fig. 7b**

21    22       23    24

| 58 | 6 |  | 35 |  | 48 | 18 |  |
|---|---|---|---|---|---|---|---|
| 39 |  | 27 | 1 | 54 |  | 61 | 4 |
|  | 13 | 60 |  | 22 | 41 |  | 10 |
|  | 44 |  |  | 46 |  | 29 |  |
| 32 |  | 23 |  | 56 |  | 15 | 51 |
|  | 16 | 49 |  |  | 3 | 37 |  |
| 53 | 8 |  | 11 |  | 34 |  | 25 |
|  |  | 20 | 63 | 30 |  | 42 |  |

**Fig. 8a**            **Fig. 8b**

21    22       23    24

|  |  | 14 |  |  |  |  |  |
|---|---|---|---|---|---|---|---|
|  |  |  |  |  | 41 |  |  |
|  |  |  |  |  |  |  |  |
|  |  |  | 59 |  |  |  |  |
|  | 23 |  |  |  |  |  |  |
|  |  |  |  | 5 |  |  |  |
|  |  |  |  |  |  | 50 |  |
| 32 |  |  |  |  |  |  |  |

**Fig. 9a**            **Fig. 9b**

Fig. 10

Fig. 11

21  22

| 64 | 64 | 64 | 64 | 37 | 64 | 64 | 56 |
|----|----|----|----|----|----|----|----|
| 64 | 62 | 64 | 64 | 64 | 64 | 64 | 64 |
| 21 | 64 | 64 | 30 | 64 | 64 | 50 | 64 |
| 43 | 64 | 24 | 64 | 64 | 8  | 64 | 18 |
| 64 | 64 | 64 | 53 | 64 | 40 | 64 | 64 |
| 14 | 64 | 64 | 5  | 64 | 64 | 64 | 27 |
| 64 | 64 | 59 | 64 | 11 | 64 | 64 | 64 |
| 64 | 34 | 64 | 64 | 64 | 46 | 64 | 2  |

**Fig. 12a**

23  24

**Fig. 12b**

21  22

| 58 | 6  | 64 | 35 | 64 | 48 | 18 | 64 |
|----|----|----|----|----|----|----|----|
| 39 | 64 | 27 | 1  | 54 | 64 | 61 | 4  |
| 64 | 13 | 60 | 64 | 22 | 41 | 64 | 10 |
| 64 | 44 | 64 | 64 | 46 | 64 | 29 | 64 |
| 32 | 64 | 23 | 64 | 56 | 64 | 15 | 51 |
| 64 | 16 | 49 | 64 | 64 | 3  | 37 | 64 |
| 53 | 8  | 64 | 11 | 64 | 34 | 64 | 25 |
| 64 | 64 | 20 | 63 | 30 | 64 | 42 | 64 |

**Fig. 13a**

23  24

**Fig. 13b**

21  22

| 64 | 64 | 14 | 64 | 64 | 64 | 64 | 64 |
|----|----|----|----|----|----|----|----|
| 64 | 64 | 64 | 64 | 64 | 41 | 64 | 64 |
| 64 | 64 | 64 | 64 | 64 | 64 | 64 | 64 |
| 64 | 64 | 64 | 59 | 64 | 64 | 64 | 64 |
| 64 | 23 | 64 | 64 | 64 | 64 | 64 | 64 |
| 64 | 64 | 64 | 64 | 5  | 64 | 64 | 64 |
| 64 | 64 | 64 | 64 | 64 | 64 | 50 | 64 |
| 32 | 64 | 64 | 64 | 64 | 64 | 64 | 64 |

**Fig. 14a**

23  24

**Fig. 14b**

21     22       23     24

| | | | | 34 | 40 | 53 | 59 |
|---|---|---|---|---|---|---|---|
| | | | | 18 | 27 | 46 | 56 |
| | | | | 5 | 14 | 30 | 50 |
| | | | | 2 | 8 | 21 | 43 |
| | | | | | 11 | 24 | 37 |
| | | | | | | | 62 |
| | | | | | | | |
| | | | | | | | |

**Fig. 15a**

**Fig. 15b**

21     22       23     24

| 44 | | | | | | | |
|---|---|---|---|---|---|---|---|
| 41 | 29 | | | | | | |
| 34 | 22 | 16 | | | | | |
| 30 | 18 | 11 | | | | | |
| 35 | 15 | 10 | 3 | 1 | | | |
| 49 | 25 | 13 | 8 | 4 | 6 | 20 | |
| 58 | 53 | 39 | 23 | 27 | 32 | 37 | 42 |
| 63 | 60 | 54 | 51 | 46 | 48 | 56 | 61 |

**Fig. 16a**

**Fig. 16b**

21     22       23     24

| | 41 | 50 | 59 | | | | |
|---|---|---|---|---|---|---|---|
| | | 23 | 32 | | | | |
| | | | 14 | | | | |
| | | | 5 | | | | |
| | | | | | | | |
| | | | | | | | |
| | | | | | | | |
| | | | | | | | |

**Fig. 17a**

**Fig. 17b**

Fig. 18

Fig. 19